# EUROPEAN PATENT APPLICATION

(11) **EP 4 722 854 A1**
(43) Date of publication of application: **08.04.2026**
(21) Application number: 25719602.2
(22) Date of filing: 17.04.2025
(51) Int. Cl.: G06F 1/16

(54) **ELECTRONIC DEVICE COMPRISING STRUCTURE FOR PROTECTING FLEXIBLE DISPLAY**

(30) Priority: 02.08.2024 KR 20240103440; 11.09.2024 KR 20240124221
(71) Applicant: Samsung Electronics Co., Ltd., Suwon-si, Gyeonggi-do 16677 (KR)
(72) Inventor: KIM, Jihoon, Suwon-si, Gyeonggi-do 16677 (KR); SONG, Minsuk, Suwon-si, Gyeonggi-do 16677 (KR); JUNG, Soli, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR); JUN, Jaeyoung, Suwon-si, Gyeonggi-do 16677 (KR); CHOI, Jinug, Suwon-si, Gyeonggi-do 16677 (KR); AHN, Jaeuk, Suwon-si, Gyeonggi-do 16677 (KR)
(74) Representative: Gulde & Partner
(86) International application number: PCT/KR2025/005265
(87) International publication number: WO 2026/029313

(57) **Abstract**

As described above, a multi-foldable electronic device includes a foldable housing including a first housing part, a second housing part, a third housing part, a first hinge housing part having a first width, a second hinge housing part having a second width greater than the first width, a first hinge assembly rotatably coupling the first housing part and the second housing part, a second hinge assembly rotatably coupling the second housing part and the third housing part, a flexible display configured to be partially bent by the first hinge assembly and the second hinge assembly, and a protection member disposed adjacent to a longitudinal end portion of the second hinge housing part. The protection member is configured to move, with respect to the second hinge housing part, in a first direction facing away from the second hinge housing part and in a second direction opposite to the first direction, respectively, as the third housing part is folded or unfolded with respect to the second housing part.

## Description

### [Technical Field]

The present disclosure relates to an electronic device including a structure for protecting a flexible display.

### [Background Art]

As a demand of a user is diversified, an electronic device may include a structure in which a display for displaying content is deformable. For example, the electronic device may include a flexible display that may be folded. The electronic device may require a structure for protecting the display, in order to reduce damage of the deformable display due to an external impact.

The above-described information may be provided as a related art for the purpose of helping understanding of the present disclosure. No argument or decision is made as to whether any of the above description may be applied as a prior art related to the present disclosure.

### [Disclosure]

### [Technical Solution]

An electronic device is disclosed. The electronic device may comprise a housing including a first housing part, a second housing part, and a third housing part. The electronic device may comprise a first hinge structure rotatably coupling the first housing part and the second housing part, a second hinge structure rotatably coupling the second housing part and the third housing part, a first hinge housing to cover a portion of the first hinge structure, and a second hinge housing to cover a portion of the second hinge structure, the second hinge housing being wider than the first hinge housing. The electronic device may comprise a foldable display supported by the first housing part, the second housing part and the third housing part, the foldable display including a bendable display portion corresponding to the second hinge structure, the foldable display being configured to be bent in a single-folded state or a multi-folded state of the electronic device. The electronic device may comprise a protection member, accommodated in a longitudinal end portion of the second hinge housing, adjacent to a periphery of the bendable display portion of the foldable display. The protection member may be configured to, when the third housing part is rotated with respect to the second housing part from the single-folded state to the multi-folded state of the electronic device, move from a first position to a second position with respect to the second hinge housing.

A multi-foldable electronic device is disclosed. The multi-foldable electronic device may comprise a foldable housing including a first housing part, a second housing part, a third housing part, a first hinge housing part, disposed at least partially between the first housing part and the second housing part, having a first width, and a second hinge housing part, disposed at least partially between the second housing part and the third housing part, having a second width greater than the first width. The multi-foldable electronic device may comprise a first hinge assembly, at least partially accommodated in the first hinge housing part, rotatably coupling the first housing part and the second housing part, a second hinge assembly, at least partially accommodated in the second hinge housing part, rotatably coupling the second housing part and the third housing part, a flexible display coupled to the foldable housing and configured to be partially bent by the first hinge assembly and the second hinge assembly, and a protection member disposed adjacent to a longitudinal end portion of the second hinge housing part. The protection member may be configured to move, with respect to the second hinge housing part, in a first direction facing away from the second hinge housing part and in a second direction opposite to the first direction, as the third housing part is folded or unfolded with respect to the second housing part.

A multi-foldable electronic device is disclosed. The multi-foldable electronic device may comprise a foldable housing including a first housing part, a second housing part, a third housing part, a first hinge housing part, disposed at least partially between the first housing part and the second housing part, having a first width, and a second hinge housing part, disposed at least partially between the second housing part and the third housing part, having a second width greater than the first width. The multi-foldable electronic device may comprise a flexible display including a first display portion coupled to the first housing part, a second display portion coupled to the second housing part, a third display portion coupled to the third housing part, a fourth display portion, between the first display portion and the second display portion, configured to be bent by the first hinge assembly, and a fifth display portion, between the second display portion and the third display portion, configured to be bent by the second hinge assembly. The multi-foldable electronic device may comprise a protection member movably coupled to an end portion of the second hinge housing part to at least partially cover a side surface of the fifth display portion. The protection member may be configured to move, with respect to the second hinge housing part, between a first position and a second position raised from the first position with respect to the second hinge housing part, as the third housing part is folded or unfolded with respect to the second housing part.

### [Description of the Drawings]

FIG. 1 is a block diagram of an electronic device in a network environment according to various embodiments.
FIG. 2A illustrates an exemplary electronic device in a first state.
FIG. 2B illustrates an exemplary electronic device in a second state.
FIG. 3A is a top plan view of an exemplary electronic device in a first state from which a flexible display is removed.
FIG. 3B is a rear view of an exemplary electronic device in a first state from which a rear cover and a display are removed.
FIG. 4A illustrates an exemplary electronic device in a first state.
FIG. 4B is a partial cross-sectional view of an exemplary electronic device cut along line A-A' of FIG. 4A.
FIG. 4C illustrates an exemplary electronic device in a second state.
FIG. 5A is an exploded perspective view of an exemplary electronic device.
FIGS. 5B, 5C, and 5D illustrate movement of a protection member according to a state change of an exemplary electronic device.
FIG. 6A is a plan view of an exemplary electronic device in a first state.
FIG. 6B is a partial cross-sectional view of an exemplary electronic device cut along line B-B' of FIG. 6A.
FIG. 6C illustrates a portion of an exemplary electronic device in a first state.
FIG. 6D illustrates a portion of an exemplary electronic device in a second state.
FIG. 7A illustrates a portion of an exemplary electronic device in a first state.
FIG. 7B illustrates a portion of an exemplary electronic device in a second state.
FIG. 8A illustrates a portion of an exemplary electronic device.
FIG. 8B is a partial cross-sectional view of an exemplary electronic device cut along line C-C' of FIG. 8A.
FIG. 8C illustrates a portion of an exemplary electronic device.
FIGS. 9A, 9B, and 9C illustrate movement of a protection member according to a state change of an exemplary electronic device.
FIGS. 9D, 9E, and 9F illustrate movement of a protection member according to a state change of an exemplary electronic device.

### [Mode for Invention]

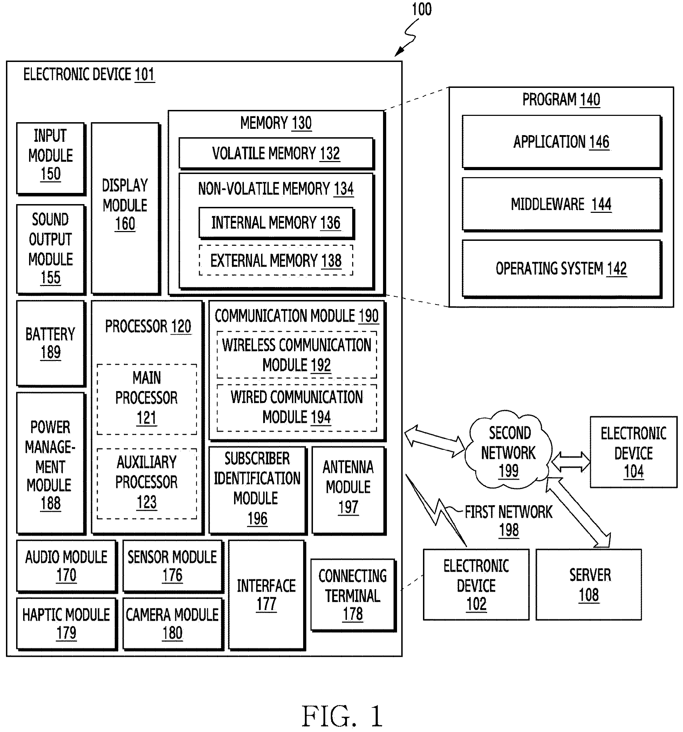

FIG. 1 is a block diagram of an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

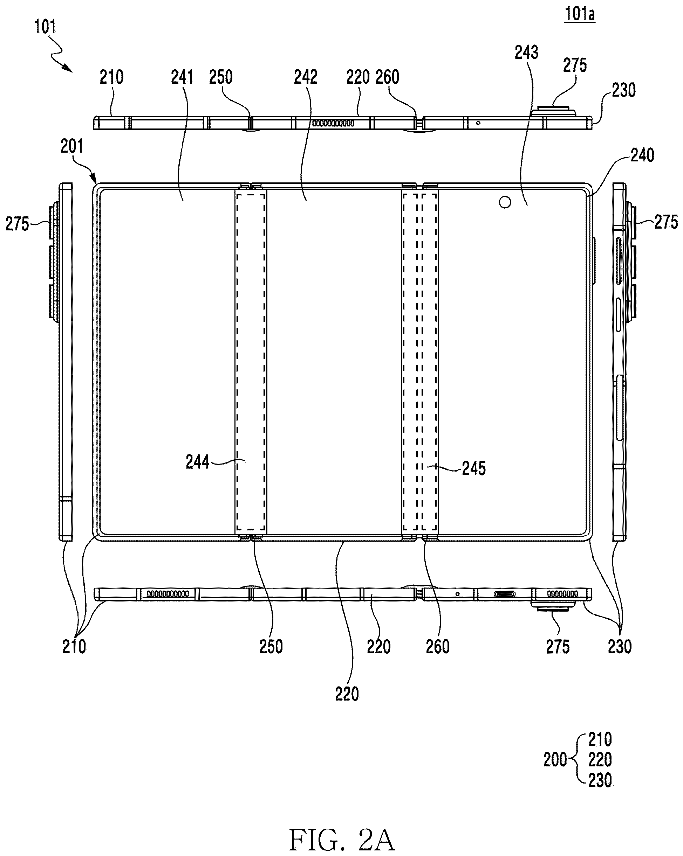

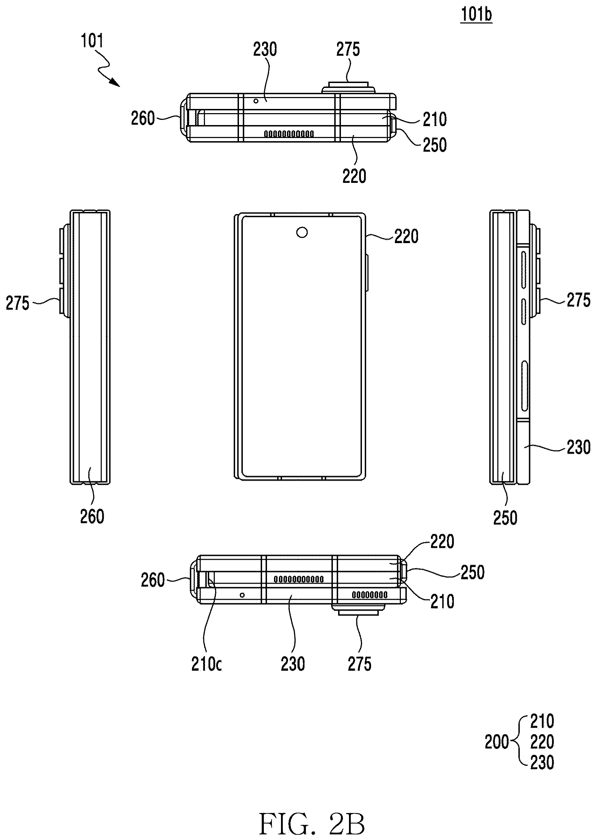

FIG. 2A illustrates an exemplary electronic device in a first state. FIG. 2B illustrates an exemplary electronic device in a second state.

Referring to FIGS. 2A and 2B, an electronic device 101 may include a housing 200, a flexible display 240, a first hinge assembly 250, and a second hinge assembly 260. The housing 200 may include a first housing part 210, a second housing part 220, and a third housing part 230. The housing 200 may be referred to as a foldable housing in terms of including a plurality of housing parts 210, 220, and 230 and being foldable multiple times. The electronic device 101 may be referred to as a multi-foldable electronic device in terms of including the housing 200 and/or the flexible display 240 that are foldable multiple times. However, an embodiments is not limited thereto.

The first housing part 210 may be rotatably coupled to the second housing part 220 by the first hinge assembly 250. The second housing part 220 and the first housing part 210 may be rotated with respect to the first hinge assembly 250. While the first housing part 210 is rotated with respect to the first hinge assembly 250, the second housing part 220 may be rotated with respect to the first hinge assembly 250. For example, when the second housing part 220 and the first housing part 210 are rotated with respect to the first hinge assembly 250, an angular displacement of the second housing part 220 may be substantially the same as an angular displacement of the first housing part 210.

The third housing part 230 may be rotatably coupled to the second housing part 220 by the second hinge assembly 260. The second housing part 220 and the third housing part 230 may be rotated with respect to the second hinge assembly 260. While the second housing part 220 is rotated with respect to the second hinge assembly 260, the third housing part 230 may be rotated with respect to the second hinge assembly 260. For example, when the second housing part 220 and the third housing part 230 rotate with respect to the second hinge assembly 260, the angular displacement (or an angular change) of the second housing part 220 may be substantially the same as an angular displacement of the third housing part 230.

The first hinge assembly 250 and the second hinge assembly 260 may change a state of the electronic device. The first hinge assembly 250 and the second hinge assembly 260 may provide (or may enable) a first state 101a of the electronic device 101 (or the first state 101a of the housing 200). The first state 101a of the electronic device 101 (or the first state 101a of the housing 200) may be described as an unfolded state of the electronic device 101 (or the housing 200). In the first state 101a, a front surface of the first housing part 210, a front surface of the second housing part 220, and a front surface of the third housing part 230 may define a front surface of the electronic device 101. In the first state 101a, the front surface of the first housing part 210, the front surface of the second housing part 220, and the front surface of the third housing part 230 may face the same direction. In the first state 101a, the electronic device 101 may provide a large display region of the flexible display 240 to a user.

The first hinge assembly 250 and the second hinge assembly 260 may provide a second state 101b of the electronic device 101 (or the second state 101b of the housing 200). The second state 101b of the electronic device 101 (or the second state 101b of the housing 200) may be described as a multi-folded state of the electronic device 101 (or the housing 200). In the second state 101b, the front surface of the first housing part 210 and the front surface of the second housing part 220 may face opposite directions, and the front surface of the second housing part 220 and the front surface of the third housing part 230 may face opposite directions. In the second state 101b, the front surface of the first housing part 210 and the front surface of the third housing part 230 may face the same direction. For example, in the second state 101b, the front surface of the second housing part 220 may face the front surface of the first housing part 210, and the front surface of the third housing part 230 may face a rear surface of the first housing part 210. In the second state 101b, the electronic device 101 may be folded to improve portability.

The first hinge assembly 250 and the second hinge assembly 260 may provide a third state of the electronic device 101. The third state of the electronic device 101 may be described as a state (a single folded state or a half folded state) in which the electronic device 101 is partially folded and partially unfolded. For example, in the third state, the front surface of the second housing part 220 and the front surface of the third housing part 230 may face the same direction, and the front surface of the first housing part 210 and the front surface of the second housing part 220 may face opposite directions. For example, in the third state, the first housing part 210 and the second housing part 220 may be folded, and the second housing part 220 and the third housing part 230 may be unfolded.

The flexible display 240 may at least partially define an exterior of the electronic device 101. The flexible display 240 may be partially disposed in the housing 200. The flexible display 240 may define the front surface of the electronic device 101. The flexible display 240 may include a first display portion 241, a second display portion 242, a third display portion 243, a fourth display portion 244, and a fifth display portion 245. The first display portion 241 of the flexible display 240 may be disposed on the front surface of the first housing part 210. The second display portion 242 of the flexible display 240 may be disposed on the front surface of the second housing part 220. The third display portion 243 of the flexible display 240 may be disposed on the front surface of the third housing part 230. The fourth display portion 244 of the flexible display 240 may be disposed between the first display portion 241 and the third display portion 243 of the flexible display 240. For example, the fourth display portion 244 of the flexible display 240 may be disposed on the first hinge assembly 250 connecting the first housing part 210 and the second housing part 220. The fifth display portion 245 of the flexible display 240 may be disposed between the second display portion 242 and the third display portion 243 of the flexible display 240. For example, the fifth display portion 245 of the flexible display 240 may be disposed on the second hinge assembly 260 connecting the second housing part 220 and the third housing part 230.

In the first state 101a, an entire display region of the flexible display 240 may be viewed from a front surface of the housing 200. For example, the first display portion 241, the second display portion 242, the third display portion 243, the fourth display portion 244, and the fifth display portion 245 of the flexible display 240 may be visually exposed. The electronic device 101 may provide a large display region including the first display portion 241, the second display portion 242, the third display portion 243, the fourth display portion 244, and the fifth display portion 245 to the user. The display region of the flexible display 240 may not be visible in the second state 101b. For example, the first display portion 241, the second display portion 242, the third display portion 243, the fourth display portion 244, and the fifth display portion 245 of the flexible display 240 may not be visually exposed. In the third state, the display region of the flexible display 240 may be partially visible from the front surface of the third housing part 230. For example, the third display portion 243 may be visually exposed, and the first display portion 241 and the second display portion 242 may not be visually exposed.

As a non-limiting example, when the flexible display 240 is used to display a screen in the first state 101a of the electronic device 101, all of the portions 241, 242, 243, 244, and 245 of the flexible display 240 may be activated. As a non-limiting example, in the second state 101b, all of the portions 241, 242, 243, 244, and 245 of the flexible display 240 may be deactivated. As a non-limiting example, in the third state of the electronic device 101, when the flexible display 240 is used to display a screen, the third display portion 243 may be activated, and the other portions 241, 242, 244, and 245 of the flexible display 240 may be deactivated.

The first hinge assembly 250 and the second hinge assembly 260 may face substantially the same direction as the first display portion 241 of the flexible display 240, the second display portion 242 of the flexible display 240, and the third display portion 243 of the flexible display 240. In the first state 101a, the fourth display portion 244 and the fifth display portion 245 may be disposed on substantially the same horizontal plane as the first display portion 241, the second display portion 242, and the third display portion 243.

The first hinge assembly 250 and the second hinge assembly 260 may provide the second state 101b of the electronic device 101. In the second state 101b, the second display portion 242 of the flexible display 240 may face the first display portion 241 of the flexible display 240, and the third display portion 243 of the flexible display 240 may face the rear surface of the first housing part 210. In the second state 101b, the fourth display portion 244 of the flexible display 240 may be folded so that the first display portion 241 of the flexible display 240 and the second display portion 242 of the flexible display 240 face different directions. In the second state 101b, the fifth display portion 245 of the flexible display 240 may be folded so that the second display portion 242 of the flexible display 240 and the third display portion 243 of the flexible display 240 face different directions.

In the second state 101b, the first housing part 210 may be disposed between the second housing part 220 and the third housing part 230. In the second state 101b, the fifth display portion 245 of the flexible display 240 disposed on the second hinge assembly 260 may partially face a side surface of the first housing part 210. For example, in order to provide visual information to the user in the second state 101b, a sub-display may be additionally disposed on a rear surface of the second housing part 220. However, an embodiment supported by the present disclosure is not limited thereto.

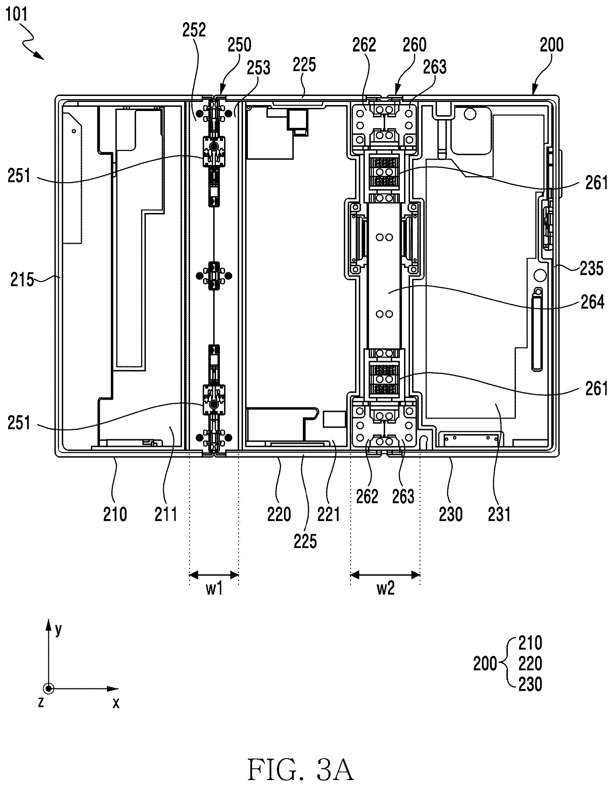

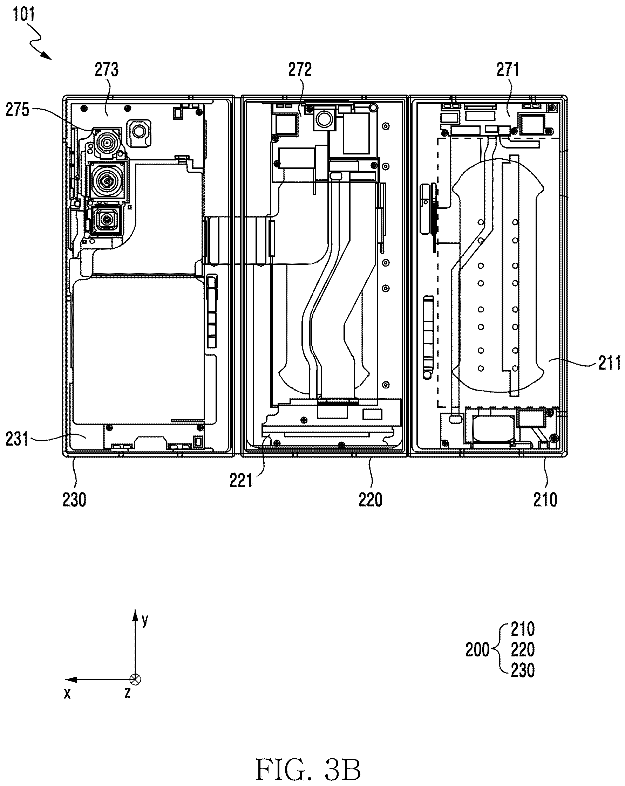

FIG. 3A is a top plan view of an exemplary electronic device in a first state from which a flexible display is removed. FIG. 3B is a rear view of an exemplary electronic device in a first state from which a rear cover and a display are removed.

Referring to FIGS. 3A and 3B, an electronic device 101 may include a first hinge assembly 250 and a second hinge assembly 260. A first width w1 of the first hinge assembly 250 may be narrower than a second width w2 of the second hinge assembly 260. A difference between the first width w1 of the first hinge assembly 250 and the second width w2 of the second hinge assembly 260 may be equal to or greater than a thickness of a first housing part 210. For example, the second hinge assembly 260 may have the second width w2 wider than the first width w1 so that the first housing part 210 is disposed between a second housing part 220 and a third housing part 230 according to a second state 101b. The first hinge assembly 250 may be referred to as a narrow hinge structure in terms of having a narrower width than the second hinge assembly 260. The second hinge assembly 260 may be referred to as a wide hinge structure in terms of a wider width than the first hinge assembly 250.

The first hinge assembly 250 may include a first set 251 of gears, a first hinge plate 252, and a second hinge plate 253. The first hinge plate 252 may be coupled to the first support portion 211 of the first housing part 210. The second hinge plate 253 may be coupled to the second support portion 221 of the second housing part 220. Gears included in the first set 251 of gears may be configured to rotate the first hinge plate 252 and the second hinge plate 253. For example, the gears included in the first set 251 of gears may rotate the second hinge plate 253 (or the second housing part 220) in conjunction with rotation of the first hinge plate 252 (or the first housing part 210). After the first hinge plate 252 (or the first housing part 210) is rotated, the gears included in the first set 251 of gears may be rotated according to the rotation of the first hinge plate 252 (or the first housing part 210). The second hinge plate 253 (or the second housing part 220) may be rotated in conjunction with the rotation of the first hinge plate 252 according to the rotation of the gears included in the first set 251 of gears.

The second hinge assembly 260 may include a second set 261 of gears, a third hinge plate 262, a fourth hinge plate 263, and a support plate 264. The third hinge plate 262 may be coupled to the second support portion 221 of the second housing part 220. The fourth hinge plate 263 may be coupled to a third support portion 231 of the third housing part 230. Gears included in the second set 261 of gears may be configured to rotate the third hinge plate 262 and the fourth hinge plate 263. For example, the gears included in the second set 261 of gears may rotate the fourth hinge plate 263 (or the third housing part 230) in conjunction with rotation of the third hinge plate 262 (or the second housing part 220). After the third hinge plate 262 (or the second housing part 220) is rotated, the gears included in the second set 261 of gears may be rotated according to the rotation of the third hinge plate 262 (or the second housing part 220). The fourth hinge plate 263 (or the third housing part 230) may be rotated in conjunction with the rotation of the third hinge plate 262 according to the rotation of the gears included in the second set 261 of gears.

The electronic device 101 may include a first printed circuit board 271, a second printed circuit board 272, and a third printed circuit board 273. Various hardware components may be mounted on each of the printed circuit boards 271, 272, and 273.

The first printed circuit board 271 may be disposed in the first support portion 211 of the first housing part 210. A hardware component in the first housing part 210 may be disposed in the first printed circuit board 271. The second printed circuit board 272 may be disposed on the second support portion 221 of the second housing part 220. A hardware component in the second housing part 220 may be disposed on the second printed circuit board 272. The third printed circuit board 273 may be disposed in the third support portion 231 of the third housing part 230. A hardware component (e.g., a rear camera 275) in the third housing part 230 may be disposed in the third printed circuit board 273.

The hardware component disposed in the first printed circuit board 271 may support the hardware component disposed in the second printed circuit board 272 and/or the hardware component disposed in the third printed circuit board 273 or may operate independently.

The hardware component disposed in the second printed circuit board 272 may support the hardware component disposed in the first printed circuit board 271 or the third printed circuit board 273 or may operate independently. The hardware components disposed in the second printed circuit board 272 may include a speaker, a front camera and/or display driving circuitry.

The hardware component disposed in the third printed circuit board 273 may include at least one processor including processing circuitry, memory including one or more storage mediums, communication circuitry, and the rear camera 275. The rear camera 275 may be exposed through a structure (e.g., an opening) of a rear surface of the third housing part 230.

The electronic device 101 may further include batteries. Each of the batteries may be attached to the support portions 211, 221, and 231 included in the housing parts 210, 220, and 230. The support portions 211, 221, and 231 may support rechargeable batteries.

The housing 200 may include protection covers 215, 225, and 235. For example, the protection covers 215, 225, and 235 may form a periphery of the electronic device 101 in a first state 101a. For example, the first housing part 210 may include the first protection cover 215 at least partially surrounding the first support portion 211. The second housing part 220 may include the second protection cover 225 at least partially surrounding the second support portion 221. The third housing part 230 may include the third protection cover 235 at least partially surrounding the third support portion 231. The second protection cover 225 may be positioned between the first protection cover 215 and the third protection cover 235 in the first state 101a of the electronic device 101. The protection covers 215, 225, and 235 may be referred to as a peripheral portion and/or a deco of the housing 200 in terms of being disposed along the periphery of the electronic device 101 to protect a periphery of the flexible display 240, but an embodiment supported by the present disclosure is not limited thereto.

The first housing part 210 and the third housing part 230 are indicated to rotate in an opposite direction with respect to the second housing part 220, but are not limited thereto. For example, while changing from the first state 101a to the second state 101b, the first housing part 210 may rotate counterclockwise with respect to the second housing part 220, and the third housing part 230 may rotate counterclockwise with respect to the second housing part 220. As the first housing part 210 and the third housing part 230 rotate in the same direction, a portion of a display region of the flexible display 240 may be visually exposed in the second state. However, an embodiment supported by the present disclosure is not limited thereto, and for example, while changing from the first state 101a to the second state 101b, the first housing part 210 may rotate clockwise with respect to the second housing part 220, and the third housing part 230 may rotate counterclockwise with respect to the second housing part 220.

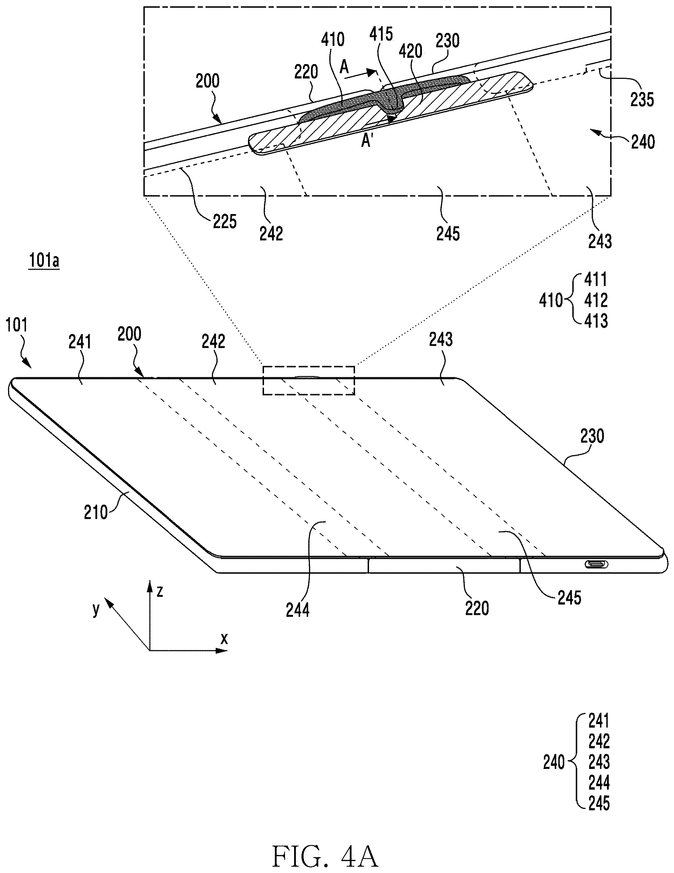

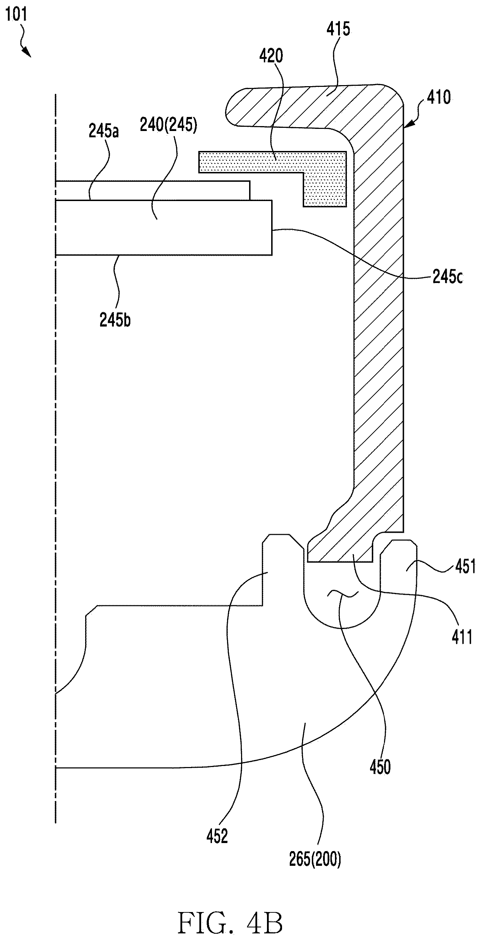

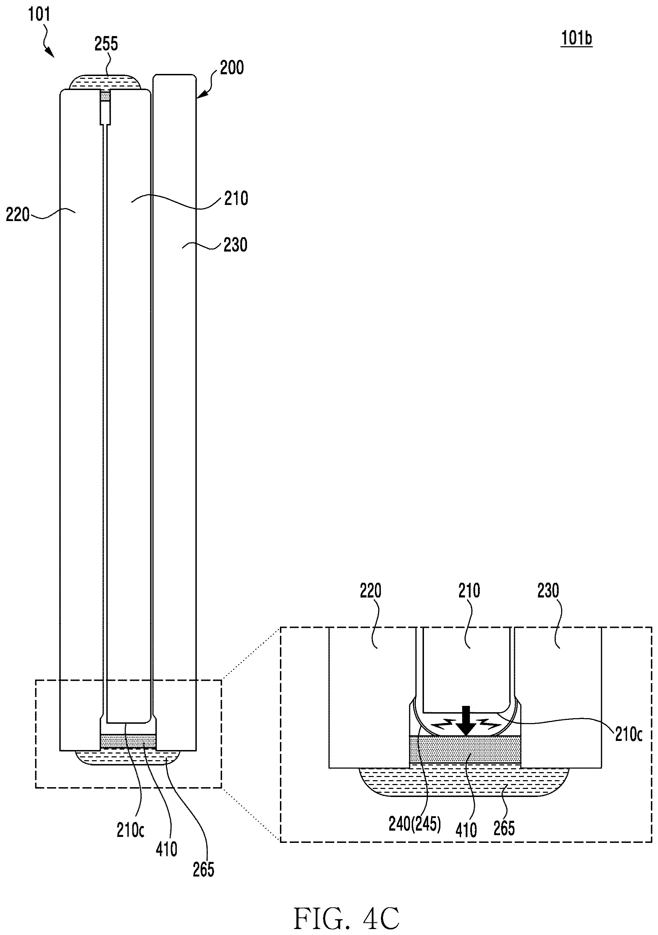

FIG. 4A illustrates an exemplary electronic device in a first state. FIG. 4B is a partial cross-sectional view of an exemplary electronic device cut along line A-A' of FIG. 4A. FIG. 4C illustrates an exemplary electronic device in a second state.

Referring to FIGS. 4A, 4B, and 4C, an electronic device 101 may include a housing 200, a flexible display 240, a first hinge assembly 250, a second hinge assembly 260, and a protection member 410. The housing 200 may include a first housing part 210, a second housing part 220, a third housing part 230, a first hinge housing part 255, and a second hinge housing part 265. The first hinge assembly 250 may rotatably connect the first housing part 210 and the second housing part 220. The second hinge assembly 260 may rotatably connect the second housing part 220 and the third housing part 230. A width (e.g., the width w2 of FIG. 3A) of the second hinge assembly 260 may be wider than a width (e.g., the width w1 of FIG. 3A) of the first hinge assembly 250.

The flexible display 240 may be referred to as a display stack or a display structure to which a plurality of layers are coupled. For example, the flexible display 240 may include a cover glass, which is an upper-most layer exposed to the outside of the electronic device 101. The cover glass may be at least partially deformable and may include one or more curved portions. For example, the flexible display 240 may include a polarizer attached under the cover glass, one or more adhesive layers, a display panel, and one or more support layers. However, an embodiment is not limited thereto, and the flexible display 240 may include a stack structure of a plurality of layers including at least partially deformable regions.

The flexible display 240 may include a first display portion (e.g., the first display portion 241 of FIG. 2A) supported by the first housing part 210, a second display portion 242 supported by the second housing part 220, a third display portion 243 supported by the third housing part 230, a fourth display portion 244 that is at least partially deformable by the first hinge assembly 250 and extends from the first display portion 241 to the second display portion 242, and a fifth display portion 245 that is at least partially deformable by the second hinge assembly 260 and extends from the second display portion 242 to the third display portion 243. The display portions 241, 242, and 243 may be referred to as flat portions of the flexible display 240. The display portions 244 and 245 may be referred to as foldable portions of the flexible display 240. When an element is referred to as a "flat portion" of the flexible display 240 in the present disclosure, it may mean that the element referred to as the flat portion is a portion among the flexible display 240 that substantially maintains a shape (e.g., a flat shape) or not deformed, while the electronic device 101 performs a folding operation for changing a state. In addition, when an element is referred to as a "foldable portion" of the flexible display 240 in the present document, it may mean that the element referred to as the foldable portion is a portion among the flexible display 240 that is bent or at least partially deformed, while the electronic device 101 performs the folding operation for changing the state. However, an embodiments is not limited thereto. For example, when referring to FIGS. 2A and 2B together, the first display portion 241 may be coupled to the first housing part 210. The second display portion 242 may be coupled to the second housing part 220. The third display portion 243 may be coupled to the third housing part 230. For example, the first display portion 241 may be at least partially surrounded by the first housing part 210. One side of the first display portion 241 may be connected to the fourth display portion 244. The second display portion 242 may be at least partially surrounded by the second housing part 220. One side of the second display portion 242 may be connected to the fourth display portion 244, and another side of the second display portion 242 opposite to the one side may be connected to the fifth display portion 245. The third display portion 243 may be at least partially surrounded by the third housing part 230. One side of the third display portion 243 may be connected to the fifth display portion 245.

For example, at least a portion (e.g., the first hinge plate 252 of FIG. 3A) of the first hinge assembly 250 may be coupled to the first housing part 210. A remaining portion (e.g., the second hinge plate 253 of FIG. 3A) of the first hinge assembly 250 may be coupled to the second housing part 220. The fourth display portion 244 of the flexible display 240 may extend from one side of the first display portion 241, across over the first hinge assembly 250, to one side of the second display portion 242. At least a portion (e.g., the third hinge plate 262 of FIG. 3A) of the second hinge assembly 260 may be coupled to the second housing part 220. A remaining portion (e.g., the fourth hinge plate 263 of FIG. 3A) of the second hinge assembly 260 may be coupled to the third housing part 230. The fifth display portion 245 of the flexible display 240 may extend from another side opposite to the one side of the second display portion 242, across over the second hinge assembly 260, to the third display portion 243.

For example, the fourth display portion 244 may be at least partially disposed above the first hinge assembly 250. The fifth display portion 245 may be at least partially disposed above the second hinge assembly 260. For example, the first hinge assembly 250 may be partially covered by the fourth display portion 244. The second hinge assembly 260 may be partially covered by the fifth display portion 245. For example, since the width w1 of the first hinge assembly 250 is smaller than the width w2 of the second hinge assembly 260, a width of the fourth display portion 244 disposed above the first hinge assembly 250 may be smaller than a width of the fifth display portion 245 disposed above the second hinge assembly 260. For example, a length of the fourth display portion 244 extending from the first display portion 241 to one side of the second display portion 242 may be smaller than a length of the fifth display portion 245 extending from another side opposite to the one side of the second display portion to the third display portion 243. For example, a size of an area of the fourth display portion 244 that is visible from the outside of the electronic device 101 in the first state (e.g., the first state 101a of FIG. 2A) that may be referred to as an unfolded state of the housing 200, may be smaller than a size of an area of the fifth display portion 245 that is visible from the outside of the electronic device 101 in the unfolded state of the housing 200. However, an embodiment supported by the present disclosure is not limited to the above-described examples.

For example, the first display portion 241 may be rotated with respect to the second display portion 242 along the first housing part 210 rotated with respect to the second housing part 220 by the first hinge assembly 250. The fourth display portion 244 extending from the first display portion 241 to the second display portion 242 may be at least partially deformed (or bent or unfolded) through the first display portion 241 rotated with respect to the second display portion 242 by the first hinge assembly 250. For example, the third display portion 243 may be rotated with respect to the second display portion 242 along the third housing part 230 rotated with respect to the second housing part 220 by the second hinge assembly 260. The fifth display portion 245 extending from the second display portion 242 to the third display portion 243 may be at least partially deformed (or bent or unfolded) through the third display portion 243 rotated with respect to the second display portion 242 by the second hinge assembly 260. However, an embodiment supported by the present disclosure is not limited to the above-described examples, and it should be recognized that rotation of an element with respect to another element is for convenience of describing the rotation of the element based on the other element. For example, "the first display portion 241 rotated with respect to the second display portion 242" may mean "the second display portion 242 rotated with respect to the first display portion 241". For example, "the third display portion 243 rotated with respect to the second display portion 242" may mean "the second display portion 242 rotated with respect to the third display portion 243". However, by the above-described embodiments, embodiments supported by the present disclosure are not limited.

The first hinge housing part 255 may accommodate the first hinge assembly 250 by being at least partially disposed between the first housing part 210 and the second housing part 220. The second hinge housing part 265 may accommodate the second hinge assembly 260, by being at least partially disposed between the second housing part 220 and the third housing part 230. A width of the second hinge housing part may be greater than a width of the first hinge housing part 255.

For example, the first hinge housing part 255 may surround the first hinge assembly 250. The second hinge housing part 265 may surround the second hinge assembly 260. For example, the first hinge housing part 255 may be covered by the first housing part 210 and the second housing part 220 in a state (e.g., the first state 101a) in which the first housing part 210 is unfolded with respect to the second housing part 220. The first hinge housing part 255 may be at least partially exposed to the outside of the housing 200 in a state (e.g., a second state 101b) in which the first housing part 210 is folded with respect to the second housing part 220. For example, the second hinge housing part 265 may be covered by the second housing part 220 and the third housing part 230 in a state (e.g., the first state 101a) in which the third housing part 230 is unfolded with respect to the second housing part 220. The second hinge housing part 265 may be at least partially exposed to the outside of the housing 200 in a state (e.g., the second state 101b) in which the third housing part 230 is folded with respect to the second housing part 220.

For example, the width w1 of the first hinge assembly 250 may correspond to the width of the first hinge housing part 255 surrounding the first hinge assembly 250. The width w2 of the second hinge assembly 260 may correspond to the width of the second hinge housing part 265. The width of the second hinge housing part 265 may be greater than the width of the first hinge housing part. However, an embodiment supported by the present disclosure is not limited thereto.

The housing 200 may include protection covers 215, 225, and 235 for protecting a periphery of the flexible display 240. For example, the first housing part 210 may include the first protection cover 215 disposed along a periphery of the first display portion 241 of the flexible display 240. The second housing part 220 may include the second protection cover 225 disposed along a periphery of the second display portion 242 of the flexible display 240. The third housing part 230 may include the third protection cover 235 disposed along a periphery of the third display portion 243 of the flexible display 240. For example, the first protection cover 215 may at least partially cover the periphery of the first display portion 241. The second protection cover 225 may at least partially cover the periphery of the second display portion 242. The third protection cover 235 may at least partially cover the periphery of the third display portion 243. However, embodiments supported by the present disclosure are not limited thereto, and the housing 200 may include a plurality of protection covers to protect the periphery of each of the display portions 241, 242, and 243 of the flexible display 240.

In order to provide deformation of the display portions 244 and 245 as a state of the housing 200 (or the electronic device 101) is changed, the housing 200 may be required to have a structure in which the protection covers 215, 225, and 235 are omitted at a position corresponding to each of the display portions 244 and 245. Since the protection covers 215, 225, and 235 are not disposed at the position corresponding to each of the display portions 244 and 245, a periphery of the fourth display portion 244 and a periphery of the fifth display portion 245 may be exposed to an external impact, or foreign substances may be introduced from the outside of the electronic device 101 through a gap between the fourth display portion 244 and the housing parts 210 and 220 or a gap between the fifth display portion 245 and the housing parts 220 and 230. A structure for protecting the peripheries of the display portions 244 and 245 and reducing the inflow of foreign substances through the gap between the display portions 244 and 245, and the housing parts 210, 220 and 230 will be described later.

The protection member 410 may be disposed adjacent to a longitudinal (e.g., a +y direction or a -y direction) end portion of the second hinge housing part 265. In the present disclosure, when referred to as a "longitudinal direction" of an element, it may be a direction with respect to the largest length of a profile of the element or a direction corresponding to a major axis of the element. In the present disclosure, when referred to as a "width direction" of an element, it may be a direction with respect to the smallest length of the profile of the element or a direction corresponding to a minor axis of the element. However, an embodiment supported by the present disclosure is not limited thereto.

For example, the protection member 410 may be seated on the second hinge housing part 265. The protection member 410 may at least partially face a side surface 245c of the fifth display portion 245 by being disposed on an end portion of the second hinge housing part 265. For example, the protection member 410 may be at least partially disposed above a front surface 245a of the fifth display portion 245 by being disposed on the second hinge housing part 265. For example, the protection member 410 may be disposed along the periphery of the fifth display portion 245 by being disposed adjacent to the longitudinal end portion of the second hinge housing part 265. The protection member 410 may be at least partially disposed between the second protection cover 225 and the third protection cover 235 when viewed from above (e.g., in a z-axis direction) the electronic device 101. For example, a portion of the protection member 410 exposed to the outside of the electronic device 101 may be disposed between the second protection cover 225 and the third protection cover 235. The protection member 410 may reduce damage to the periphery of the fifth display portion 245 from an external impact instead of the protection covers 225 and 235, by being disposed along the periphery of the fifth display portion 245.

For example, the second hinge housing part 265 may include a seating groove 450 formed at the longitudinal end portion of the second hinge housing part 265. The protection member 410 may be partially accommodated in the seating groove 450. For example, the protection member 410 may be coupled to the seating groove 450. The protection member 410 may be fastened onto the second hinge housing part 265 by being at least partially disposed in the seating groove 450. For example, the protection member 410 may be at least partially disposed between an outer wall 451 and an inner wall 452 of the seating groove 450. The protection member 410 may be supported by the outer wall 451 and the inner wall 452. However, an embodiment supported by the present disclosure is not limited thereto.

The protection member 410 may include a protrusion 415 for guiding deformation of the fifth display portion 245 so that the fifth display portion 245, which is deformed as a state of the electronic device 101 (or the housing 200) is changed, is deformed into a designated shape. For example, the protection member 410 may be seated on the second hinge housing part 265 disposed under the fifth display portion 245. At least a portion of the protection member 410 may be visible from the outside of the electronic device 101 by being disposed along the periphery of the fifth display portion 245. For example, the protection member 410 may face a side surface of the fifth display portion 245. The protection member 410 may be disposed substantially parallel to the side surface 245c of the fifth display portion 245 in the unfolded state (e.g., the first state 101a of FIG. 2A) of the electronic device 101. For example, the protrusion 415 of the protection member 410 may be disposed above the fifth display portion 245. The protrusion 415 may be, for example, disposed on a cover member 420 disposed on the fifth display portion 245.

For example, the fifth display portion 245 may be at least partially bent while the electronic device 101 is changed from the first state 101a to the second state 101b. The protrusion 415 of the protection member 410 may guide the cover member 420 and/or the fifth display portion 245 so that the cover member 420 and/or the fifth display portion 245 under the protrusion 415 is changed to a designated shape (e.g., changed from a plane shape to a U shape). For example, the protrusion 415 of the protection member 410 may guide the deformation of the cover member 420 and the fifth display portion 245 while a state of the electronic device 101 is changed by pressing the cover member 420 and the fifth display portion 245 under the protrusion 415 downward (e.g., in a -z direction). For example, the protrusion 415 of the protection member 410 may guide the deformation of the fifth display portion 245 and/or the cover member 420 by reducing an irregular shape change (e.g., protrusion deformation) of the cover member 420 due to the deformation of the fifth display portion 245 while the state of the electronic device 101 is changed. The electronic device 101 may reduce damage to the fifth display portion 245 by an external impact and guide the deformation of the fifth display portion 245 and the cover member 420, by including the protection member 410 including the protrusion 415 and disposed along the periphery of the fifth display portion 245. However, an embodiment supported by the present disclosure is not limited thereto.

The electronic device 101 may include the cover member 420 disposed on the second display portion 242, the third display portion 243, and the fifth display portion 245 of the flexible display 240. For example, the cover member 420 may be disposed on the second display portion 242, the third display portion 243, and the fifth display portion 245 of the flexible display 240 along the periphery of the flexible display 240. For example, the cover member 420 may be disposed above a portion of the front surface 245a and a portion of the side surface 245c of the fifth display portion 245. For example, the cover member 420 may cover the periphery of the fifth display portion 245, a portion of the periphery of the second display portion 242, and the portion of a periphery of the third display portion 243. For example, a portion of the cover member 420 may be visible from the outside of the electronic device 101 by being disposed on the fifth display portion 245. Another portion of the cover member 420 may be covered by the protection covers 225 and 235 of the housing 200.

For example, the cover member 420 may include a restorable elastic material (e.g., rubber). The cover member 420 may be deformed along the fifth display portion 245 that is at least partially deformed by the third display portion 243 rotated with respect to the second display portion 242. For example, while the electronic device 101 is changed from the first state 101a to the second state 101b, the cover member 420 may be at least partially bent or deformed along the fifth display portion 245 that is bent. The cover member 420 may be at least partially unfolded or deformed along the fifth display portion 245 that is unfolded while the electronic device 101 is changed from the second state 101b to the first state 101a. The cover member 420 may be restored to be substantially the same as a shape of the cover member 420 in the first state 101a before changing to the second state 101b while the electronic device 101 is changed from the second state 101b to the first state 101a. However, an embodiment supported by the present disclosure is not limited thereto. The electronic device 101 may reduce inflow of foreign substances from the outside through a gap between the fifth display portion 245 and the housing 200, by including the cover member 420 disposed on the fifth display portion 245, the second display portion 242, and the third display portion 243 along the periphery of the flexible display 240.

Referring to FIG. 4C, the first housing part 210 may be positioned between the second housing part 220 and the third housing part 230 in the second state 101b of the electronic device 101. By being positioned between the second housing part 220 and the third housing part 230, the first housing part 210 may face the fifth display portion 245 that is at least partially bent in the second state 101b.

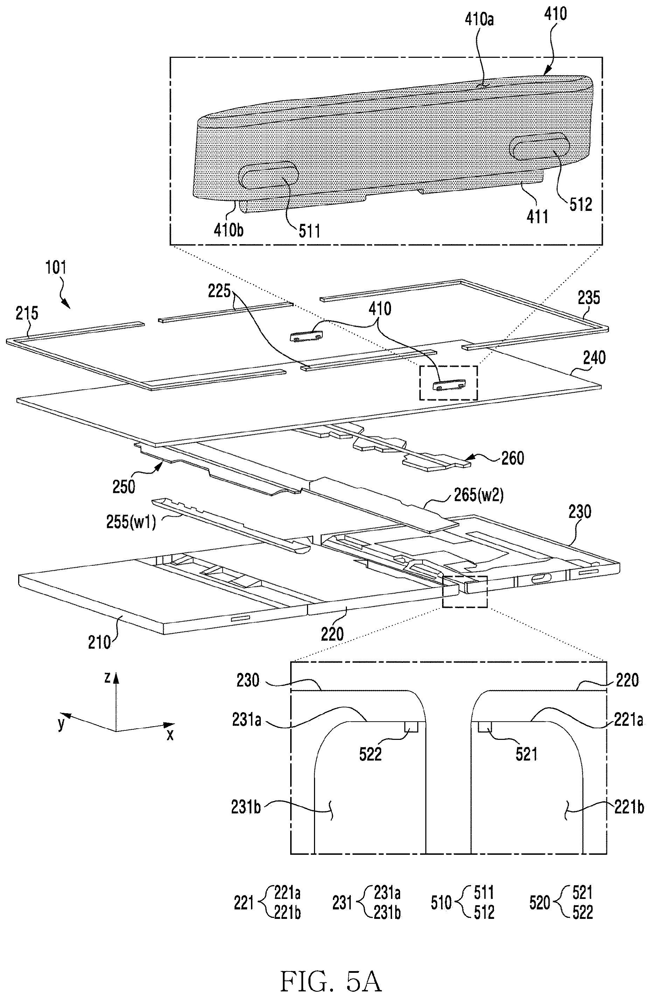

For example, when the electronic device 101 falls in the second state 101b, the bent fifth display portion 245 may be damaged by the first housing part 210 facing the fifth display portion 245. For example, in the second state 101b of the electronic device 101, the hinge assemblies 250, and 260 (or hinge housing parts 255 and 265) may move due to an external impact. For example, the first housing part 210 may be moved toward the cover member 420 and/or the fifth display portion 245 by movement of the first hinge assembly 250 due to an impact exerted to the electronic device 101 when the electronic device 101 falls. By movement of the second hinge assembly 260 due to the impact, the third housing part 230 may be moved in an opposite direction to the first housing part 210. According to the movement of the housing parts 210 and 230, a side surface 210c of the first housing part 210 may cause damage to the fifth display portion 245 by being contacted with the fifth display portion 245. The electronic device 101 may require a movable structure of the protection member 410 to reduce damage to the fifth display portion 245 by the movement of the housing parts 210, 220, and 230 due to an external impact. The movable structure of the protection member 410 will be described through an exemplary illustration of FIG. 5A or below.

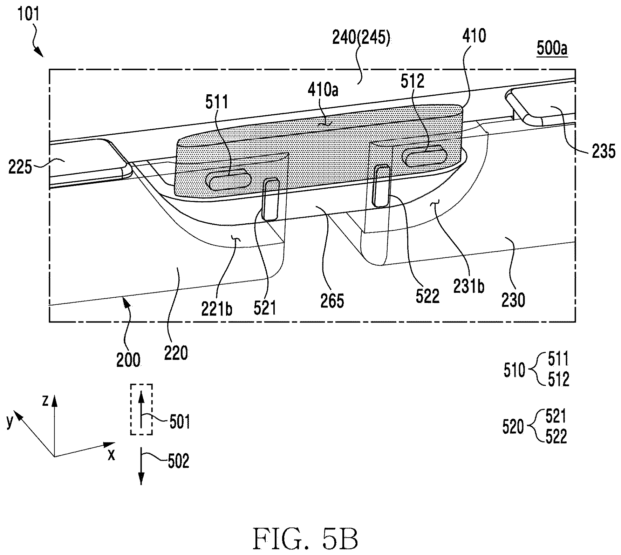

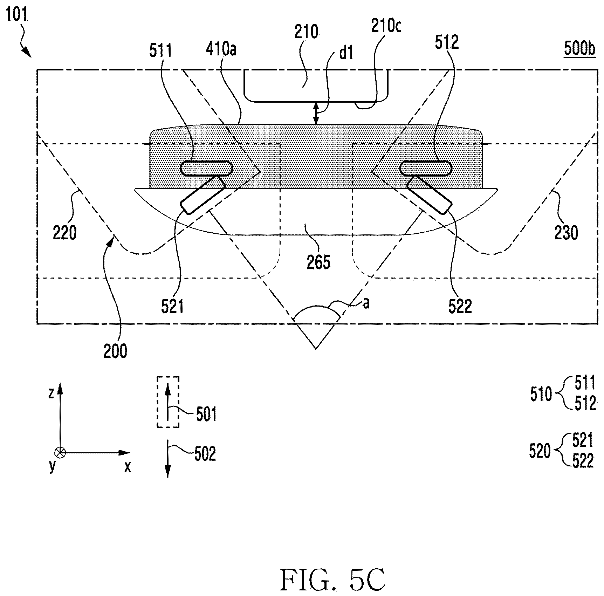

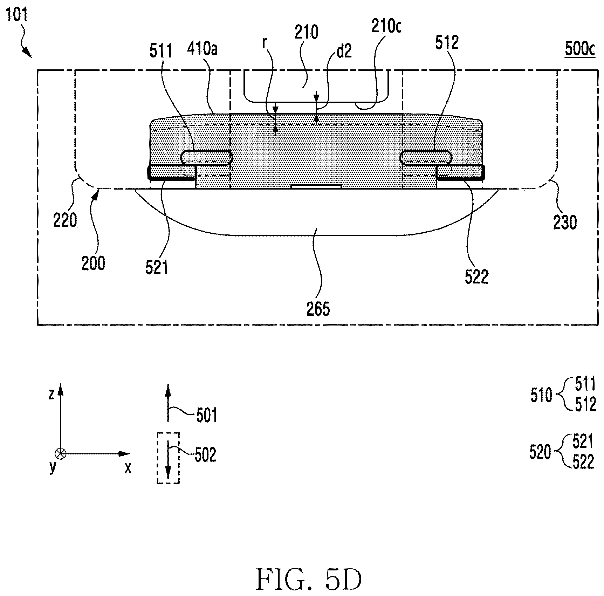

FIG. 5A is an exploded perspective view of an exemplary electronic device. FIGS. 5B, 5C, and 5D illustrate movement of a protection member according to a state change of an exemplary electronic device.

Referring to FIGS. 5A, 5B, 5C, and 5D, an electronic device 101 may include a housing 200 including a first housing part 210, a second housing part 220, a third housing part 230, a first hinge housing part 255 disposed at least partially between the first housing part 210 and the second housing part 220 and having a first width w1, and a second hinge housing part 265 disposed at least partially between the second housing part 220 and the third housing part 230 and having a second width w2 greater than the first width w1. The electronic device 101 may include a first hinge assembly 250 at least partially accommodated in the first hinge housing part 255 and rotatably coupling the first housing part 210 and the second housing part 220, and a second hinge assembly 260 at least partially accommodated in the second hinge housing part 265 and rotatably coupling the second housing part 220 and the third housing part 230. The electronic device 101 may include a protection member 410 disposed adjacent to a longitudinal end portion of the second hinge housing part 265. However, an embodiment supported by the present disclosure is not limited thereto, and the electronic device 101 may include the structures and/or the configurations (e.g., the protection covers 215, 225, and 235, the display portions 241, 242, 243, 244, and 245, the cover member 420, the protrusion 415 of the protection member 410, the seating groove 450, the outer wall 451, and the inner wall 452) described in FIGS. 4A to 4C. Hereinafter, an overlapping description of structures and/or configurations having the same reference numerals as the structures and/or the configurations described in FIGS. 4A to 4C may be omitted.

As the third housing part 230 is folded or unfolded with respect to the second housing part 220, the protection member 410 may be configured to move, with respect to the second hinge housing part 265, in a first direction 501 facing away from the second hinge housing part 265 or in a second direction 502 opposite to the first direction 501, respectively. For example, as the third housing part 230 is folded or unfolded with respect to the second housing part 220, the protection member 410 may be movable between a first position with respect to the second hinge housing part 265 and a second position raised from the first position with respect to the second hinge housing part 265. For example, when referring to FIG. 5B, the protection member 410 may be positioned at the first position with respect to the second hinge housing part 265 in a state 500a in which the third housing part 230 is fully unfolded with respect to the second housing part 220. When referring to FIG. 5D, in a state 500c in which the third housing part 230 is fully folded with respect to the second housing part 220, the protection member 410 may be positioned at the second position raised higher than the first position in the state 500a with respect to the second hinge housing part 260. However, an embodiment supported by the present disclosure is not limited thereto.

For example, when referring to FIGS. 5B, 5C, and 5D sequentially, the electronic device 101 may move in the first direction 501 facing away from the second hinge housing part 265, while changing from the state 500a in which the third housing part 230 is unfolded with respect to the second housing part 220, through a state 500b, to the state 500c in which the third housing part 230 is folded with respect to the second housing part 220. For example, while the third housing part 230 is folded with respect to the second housing part 220, the protection member 410 may rise from the second hinge housing part 265. For example, while the third housing part 230 is folded with respect to the second housing part 220, a length of the protection member 410 protruding from a front surface (e.g., the front surface 245a of FIG. 4B) of the fifth display portion 245 may increase. For example, while the third housing part 230 is folded with respect to the second housing part 220, a distance between a protection surface 410a of the protection member 410 configured to face a side surface 210c of the first housing part 210 and the side surface 210c of the first housing part 210 may be changed from a first distance d1 to a second distance d2 that is relatively smaller than the first distance d1. For example, while the third housing part 230 is folded with respect to the second housing part 220, a seating portion 411 of the protection member 410 accommodated in a seating groove (e.g., the seating groove 450 of FIG. 4B) of the second hinge housing part 265 in the state 500a, may be at least partially exposed to the outside of the housing 200. For example, while the third housing part 230 is folded with respect to the second housing part 220 in a state in which the side surface 210c of the first housing part 210 faces the protection member 410, the protection member 410 may be closer to the first housing part 210 (or the side surface 210c) by moving toward the first housing part 210 (or the side surface 210c). For example, while the third housing part 230 is folded with respect to the second housing part 220, the protection member 410 may be lifted with respect to the second hinge housing part 265. However, an embodiment supported by the present disclosure is not limited thereto.

For example, when referring to FIGS. 5D, 5C, and 5B sequentially, the electronic device 101 may move in the second direction opposite to the first direction 501 facing away from the second housing part 265, while changing from the state 500c in which the third housing part 230 is folded with respect to the second housing part 220, through the state 500b, to the state 500a in which the third housing part 230 is unfolded with respect to the second housing part 220. For example, while the third housing part 230 is unfolded with respect to the second housing part 220, the protection member 410 may descend from the second hinge housing part 265. For example, while the third housing part 230 is unfolded with respect to the second housing part 220, the length of the protection member 410 protruding from the front surface (e.g., the front surface 245a of FIG. 4B) of the fifth display portion 245 may be reduced. For example, while the third housing part 230 is folded with respect to the second housing part 220, a distance between the protection surface 410a of the protection member 410 configured to face the side surface 210c of the first housing part 210 and the side surface 210c of the first housing part 210 may be changed from the second distance d2 to the first distance d1 that is relatively greater than the second distance d2. For example, while the third housing part 230 is unfolded with respect to the second housing part 220, the seating portion 411 of the protection member 410 accommodated in the seating groove 450 of the second hinge housing part 265 in the state 500a may be fully inserted into the seating groove 450. For example, while the third housing part 230 is folded with respect to the second housing part 220 in a state in which the side surface 210c of the first housing part 210 faces the protection member 410, the protection member 410 may face away from the first housing part 210 (or the side surface 210c), by moving in the second direction 502 away from the first housing part 210 (or the side surface 210c). For example, while the third housing part 230 is folded with respect to the second housing part 220, the protection member 410 may be put down to the second hinge housing part 265 (or the seating groove 450 of FIG. 4B). However, an embodiment supported by the present disclosure is not limited thereto. The protection member 410 may reduce damage to the fifth display portion 245 by the first housing part 210 moved due to an external impact, by moving in the first direction 501 facing away from the second hinge housing part 265 as the third housing part 230 is folded with respect to the second housing part 220. The protection member 410 may increase an aesthetic and usability of the electronic device 101 in a first state (e.g., the first state 101a of FIG. 2A) of the electronic device 101, by moving in the second direction 502 opposite to the first direction 501 facing away from the second hinge housing part 265 as the third housing part 230 is unfolded with respect to the second housing part 220. However, an embodiment supported by the present disclosure is not limited thereto. Hereinafter, structures and/or configurations of the electronic device 101 for moving the protection member 410 will be exemplarily described.

The protection member 410 may include one or more protrusions 510 protruding from the protection member 410. The housing 200 may include one or more lifting portions 520 configured to push up each of the one or more protrusions 510. The one or more lifting portions 520 may be configured to raise the protection member 410 by pushing up the one or more protrusions 510, respectively. For example, the one or more lifting portions 520 may protrude from an inner surface 221 of the second housing part 220 and/or an inner surface 231 of the third housing part 230, toward the protection member 410. The one or more lifting portions 520 may be configured to be contacted with or spaced apart from the one or more protrusions 510 protruding from the protection member 410 while a state of the electronic device 101 is changed, by protruding toward the protection member 410.

For example, the one or more protrusions 510 may include a first protrusion 511 protruding from the protection member 410 toward the inner surface 221 of the second housing part 220, and a second protrusion 512 protruding from the protection member 410 toward the inner surface 231 of the third housing part 230. The housing 200 may include a first lifting portion 521 formed on the inner surface 221 of the second housing part 220 and configured to push up the first protrusion 511, and a second lifting portion 522 formed on the inner surface 231 of the third housing part 230 and configured to push up the second protrusion 512.

For example, the inner surface 221 of the second housing part 220 and the inner surface 231 of the third housing part 230 may at least partially accommodate the second hinge housing part 265. The protection member 410 may face the inner surface 221 of the second housing part 220 and/or the inner surface 231 of the third housing part 230 by being at least partially accommodated in the second hinge housing part 265.

For example, the inner surface 221 of the second housing part 220 may include a first inner surface 221a facing the protection member 410 and a second inner surface 221b extending from the first inner surface 221a. The second inner surface 221b may be a surface sliding with respect to the second hinge housing part 265 while the second housing part 220 rotates with respect to the second hinge housing part 265. The first lifting portion 521 may face the protection member 410 by being formed on the first inner surface 221a. The first protrusion 511 may be formed on a surface of the protection member 410 facing the first inner surface 221a. For example, the inner surface 231 of the third housing part 230 may include a third inner surface 231a facing the protection member 410 and a fourth inner surface 231b extending from the third inner surface 231a. The fourth inner surface 231b may be a surface sliding with respect to the second hinge housing part 265 while the third housing part 230 rotates with respect to the second hinge housing part 265. The second lifting portion 522 may face the protection member 410 by being formed on the third inner surface 231a. The second protrusion 512 may be formed on a surface of the protection member 410 facing the third inner surface 231a. However, an embodiment supported by the present disclosure is not limited thereto, and the electronic device 101 may include a plurality of protrusions formed on the protection member 410 and a plurality of lifting portions formed on the housing 200 to respectively correspond to the plurality of protrusions to push up the protection member 410.

For example, when referring to FIGS. 5B, 5C, and 5D sequentially, the second housing part 220 and the third housing part 230 may be rotated with respect to the second hinge housing part 265, respectively, while changing from the state 500a to the state 500b. The first lifting portion 521 formed in the second housing part 220 may be contacted with the first protrusion 511 of the protection member 410 by rotating along the second housing part 220. The second lifting portion 522 formed in the third housing part 230 may be contacted with the second protrusion 512 of the protection member 410 by rotating along the third housing part 230. When referring to FIGS. 5B to 5D sequentially, the second housing part 220 and the third housing part 230 may be fully folded by being rotated with respect to the second hinge housing part 265, respectively, while changing from an unfolded state (e.g., the state 500a) of the electronic device 101 to a multi-folded state (e.g., the state 500c) of the electronic device 101. The first lifting portion 521 may push up the first protrusion 511 in the first direction 501 by rotating along the second housing part 220 in a state of being contacted with the first protrusion 511. The second lifting portion 522 may push up the second protrusion 512 in the second direction 502 by rotating along the third housing part 230 in a state of being contacted with the second protrusion 512. The one or more lifting portions 520 may move the protection member 410 in the first direction 501 facing away from the second hinge housing part 265, by pushing up the one or more protrusions 510 of the protection member 410, while the third housing part 230 is folded with respect to the second housing part 220.

For example, when referring to FIGS. 5D, 5C, and 5B sequentially, the second housing part 220 and the third housing part 230 may be rotated with respect to the second hinge housing part 265, respectively, while changing from the state 500c to the state 500b. The first lifting portion 521 formed in the second housing part 220 may descend by rotating along the second housing part 220 in the state of being contacted with the first protrusion 511 of the protection member 410. The second lifting portion 522 formed in the third housing part 230 may descend by rotating along the third housing part 230 in the state of being contacted with the second protrusion 512 of the protection member 410. As the first lifting portion 521 and the second lifting portion 522 descend, the protection member 410 may be moved in the second direction 502 opposite to the first direction 501. While changing from the state 500b to the state 500a, the second housing part 220 and the third housing part 230 may be fully unfolded by being rotated with respect to the second hinge housing part 265, respectively. The first lifting portion 521 may be spaced apart from the first protrusion 511 by rotating along the second housing part 220. The second lifting portion 522 may be spaced apart from the second protrusion 512 by rotating along the third housing part 230. The one or more lifting portions 520 may move the protection member 410 in the second direction 502 that descends toward the second hinge housing part 265, by being spaced apart from the one or more protrusions 510 of the protection member 410, while the third housing part 230 is unfolded with respect to the second housing part 220. However, the described-above is merely exemplary, and it should be noted that since the electronic device 101 may include various structures and/or configurations for moving the protection member 410 while the state of the electronic device 101 is changed to reduce damage to the fifth display portion 245, an embodiment supported by the present disclosure is not limited thereto.

For example, when referring to FIG. 5C, the state 500b in which the one or more lifting portions 520 initiate contact with the one or more corresponding protrusions 510, respectively, is exemplarily illustrated. The first lifting portion 521 and the second lifting portion 522 may be contacted with the first protrusion 511 and the second protrusion 512, respectively, in a state in which an angle a between the second housing part 220 and the third housing part 230 is within a designated angle range. The designated angle range may be 45 degrees to 90 degrees, but an embodiment supported by the present disclosure is not limited thereto.

When referring to FIGS. 5B and 5D, the state 500a in which the third housing part 230 and the second housing part 220 are fully unfolded with respect to each other, and the state 500c in which the third housing part 230 and the second housing part 220 are fully folded with respect to each other are exemplarily illustrated. A movement range r of the protection member 410 with respect to the second hinge housing part 265 may be 2 mm to 4 mm. For example, a difference between the distance d1 between the side surface 210c of the first housing part 210 and the protection surface 410a of the protection member 410 in the state 500a, and the distance d2 between the side surface 210c and the protection surface 410a in the state 500c, may be 2mm to 4mm. However, an embodiment supported by the present disclosure is not limited thereto.

For example, when referring to FIG. 5D, the state 500c may be referred to as a second state (e.g., the second state 101b of FIG. 2B) of the electronic device 101, which is the multi-folded state of the electronic device 101. The protection member 410 may be spaced apart from the first housing part 210 in the second state in which the first housing part 210 and the third housing part 230 are folded with respect to the second housing part 220, respectively. The distance d2 between the protection member 410 and the side surface 210c of the first housing part 210 facing the protection member 410 in the second state 101b may be 0.05 mm to 2 mm. However, an embodiment supported by the present disclosure is not limited thereto, and for example, the protection member 410 may be contacted with the first housing part 210 by moving in the first direction 501 with respect to the second hinge housing part 265 while the state of the electronic device 101 is changed. For example, the protection surface 410a of the protection member 410 may be configured to be contacted with the side surface 210c of the first housing part 210 in the second state 101b of the electronic device 101. However, an embodiment supported by the present disclosure is not limited thereto.

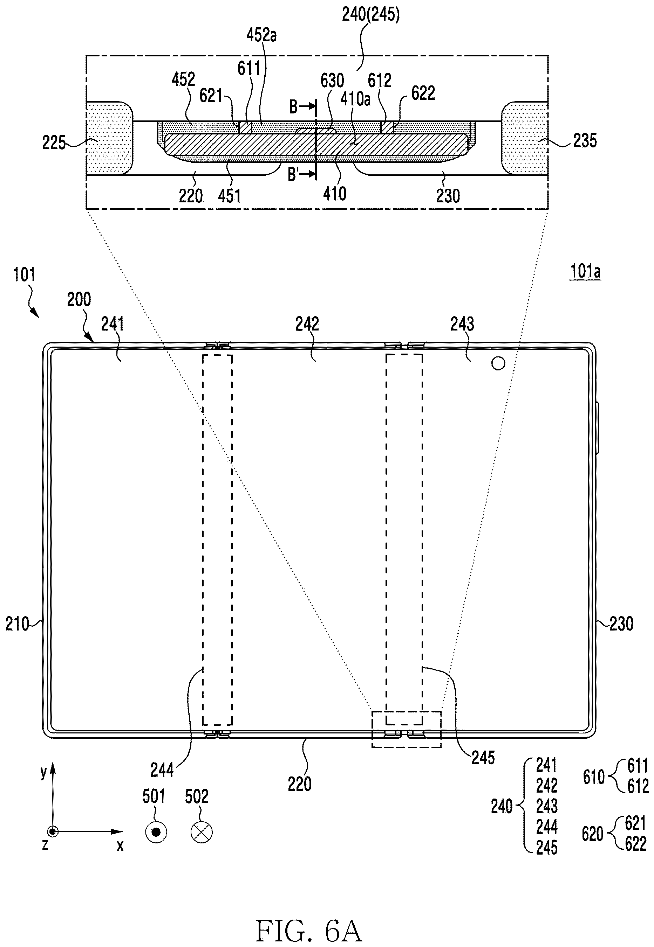

The electronic device 101 may reduce damage to the fifth display portion 245 due to an external impact using the protection member 410, by including the protection member 410 configured to raise or descend with respect to the second hinge housing part 265 while the state of the electronic device 101 is changed. In FIG. 6A or below, structures and/or configurations for guiding movement of the protection member 410 movable with respect to the second hinge housing part 265 and aligning a position of the protection member 410 are exemplarily described.

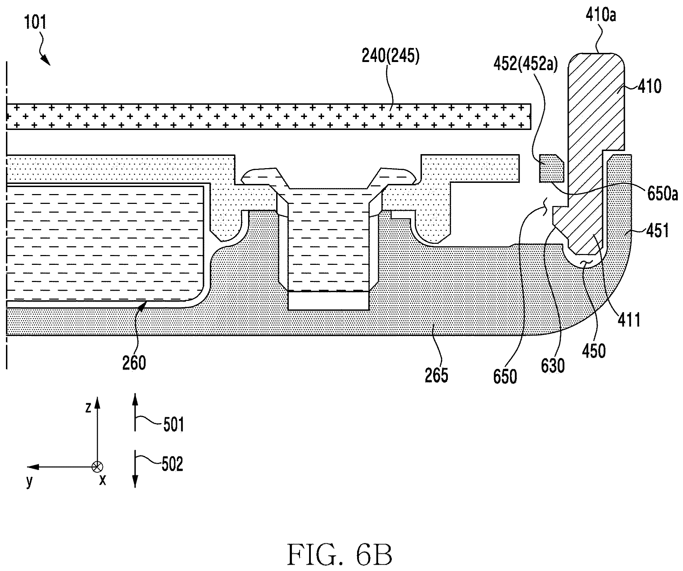

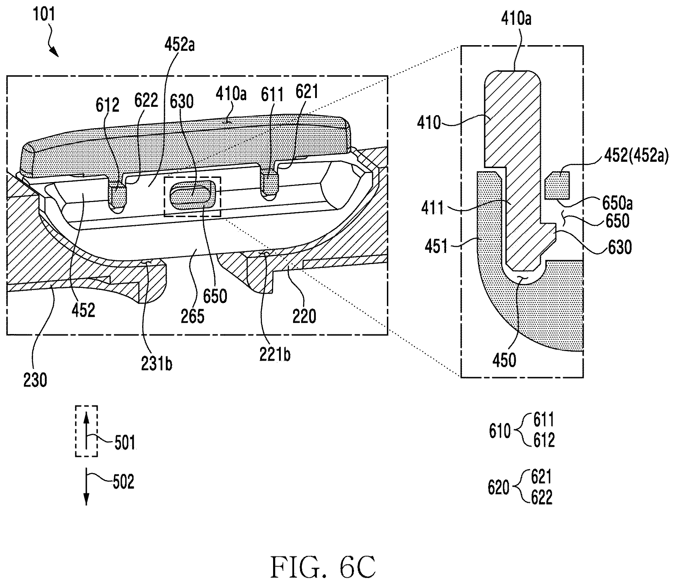

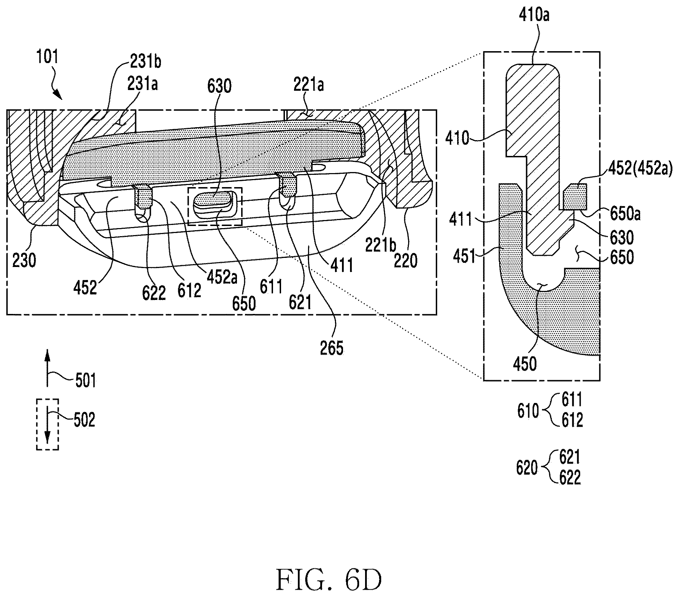

FIG. 6A is a plan view of an exemplary electronic device in a first state. FIG. 6B is a partial cross-sectional view of an exemplary electronic device cut along line B-B' of FIG. 6A. FIG. 6C illustrates a portion of an exemplary electronic device in a first state. FIG. 6D illustrates a portion of an exemplary electronic device in a second state.

Referring to FIGS. 6A, 6B, 6C, and 6D, an electronic device 101 may include a housing 200 including a first housing part 210, a second housing part 220, a third housing part 230, a first hinge housing part (e.g., the first hinge housing part 255 of FIG. 4C) disposed at least partially between the first housing part 210 and the second housing part 220 and having a first width (e.g., the w1 of FIG. 3A), and a second hinge housing part 265 disposed at least partially between the second housing part 220 and the third housing part 230 and having a second width (e.g., the w2 of FIG. 3A) greater than the first width w1. The electronic device 101 may include a first hinge assembly (e.g., the first hinge assembly 250 of FIG. 2B) accommodated at least partially in the first hinge housing part 255 and rotatably coupling the first housing part 210 and the second housing part 220, and a second hinge assembly (e.g., the second hinge assembly 260 of FIG. 3A) at least partially accommodated in the second hinge housing part 265 and rotatably coupling the second housing part 220 and the third housing part 230. The electronic device 101 may include a protection member 410 disposed adjacent to a longitudinal end portion of the second hinge housing part 265. As the third housing part 230 is folded or unfolded with respect to the second housing part 220, the protection member 410 may be configured to move, with respect to the second hinge housing part 265, in a first direction 501 facing away from the second hinge housing part 265 and a second direction 502 opposite to the first direction 501. However, an embodiment supported by the present disclosure is not limited thereto, and the electronic device 101 may include the structures and/or the configurations (e.g., the protection covers 215, 225, and 235, the display portions 241, 242, 243, 244, and 245, the cover member 420, the protrusion 415 of the protection member 410, the seating groove 450, the outer wall 451, the inner wall 452, the one or more protrusions 510, and the one or more lifting portions 520) described in FIGS. 4A to 5D. Hereinafter, an overlapping description of structures and/or configurations having the same reference numerals as the structures and/or the configurations described in FIGS. 4A to 5D may be omitted.

As the protection member 410 moves with respect to the second hinge housing part 265, the protection member 410 may include a guide portion 610 that slides with respect to the second hinge housing part 265. The second hinge housing part 265 may include a guide rail 620 formed in the inner wall 452 of the seating groove 450 in which the protection member 410 is seated and guiding the guide portion 610 to move in the first direction 501 and the second direction 502 opposite to the first direction 501.

For example, the protection member 410 may be at least partially interposed between the outer wall 451 and the inner wall 452 of the seating groove 450 formed at the longitudinal end portion of the second hinge housing part 265. The guide rail 620 may be formed on the inner wall 452. The guide portion 610 may be accommodated in the guide rail 620 by protruding from a seating portion 411 of the protection member 410. For example, the guide rail 620 may guide a movement direction of the guide portion 610 that is slidable through the guide rail 620 in the first direction 501 and the second direction 502, by having a length in the first direction 501 and the second direction 502 opposite to the first direction 501, which are movement directions of the protection member 410. The second hinge housing part 265 may guide movement and a position of the protection member 410 by including the guide rail 620 for guiding movement of the guide portion 610 that is slidable with respect to the second hinge housing part 265. However, an embodiment supported by the present disclosure is not limited thereto, and for example, although not illustrated, the guide portion 610 may protrude from the protection member 410 toward the outer wall 451 of the seating groove 450. The guide rail 620 may be formed on the outer wall 451 to guide the movement of the guide portion 610. However, an embodiment supported by the present disclosure is not limited thereto, and the electronic device 101 may include guide structures for guiding the movement of the protection member 410 in the first direction 501 and the second direction 502.

For example, the guide portion 610 may include a first guide portion 611 protruding from a surface of the protection member 410 facing the inner wall 452 of the seating groove 450, and a second guide portion 612 spaced apart from the first guide portion 611 and protruding from the surface. The second hinge housing part 265 may include a first guide rail 621 formed on the inner wall 452 and accommodating the first guide portion 611, and a second guide rail 622 accommodating the second guide portion 612. The guide rails 621 and 622 may guide a movement direction of the guide portions 611 and 612 by having a length in the first direction 501 and/or the second direction 502, which are the movement directions of the protection member 410, respectively. The guide rails 621 and 622 may guide the movement of the protection member 410 in the first direction 501 or the second direction 502, by guiding the movement direction of the guide portions 611 and 612. For example, when referring to FIGS. 6C and 6D sequentially, the guide rails 621 and 622 may be configured to move the protection member 410 in the first direction 501, by guiding movement of the guide portions 611 and 612 of the protection member 410 that is raised (e.g., through lifting portions 521 and 522). For example, when referring to FIGS. 6D and 6C sequentially, the guide rails 621 and 622 may be configured to move the protection member 410 in the second direction 502 opposite to the first direction 501, by guiding the movement of the guide portions 611 and 612 of the protection member 410 that is descended (e.g., through the lifting portions 521 and 522). However, an embodiment supported by the present disclosure is not limited thereto.

The protection member 410 may include a hook portion 630 protruding from the protection member 410 toward the inner wall 452 of the seating groove 450. The second hinge housing part 265 may include a hole 650 forming a space for accommodating the hook portion 630 in the inner wall 452 and limiting movement of the hook portion 630 to prevent the protection member 410 from being separated from the second hinge housing part 265 in a state in which the third housing part 230 is unfolded with respect to the second housing part 220. For example, the hook portion 630 may protrude from a surface of the protection member 410 toward the inner wall 452 of the seating groove 450 along with the guide portions 611 and 612 of the protection member 410. For example, the hook portion 630 may be positioned, formed, or disposed between the first guide portion 611 and the second guide portion 612. For example, the hook portion 630 may protrude into the inside of the hole 650 formed on the inner wall 452. As the protection member 410 moves with respect to the second hinge housing part 265, the hook portion 630 may be contacted or locked with an inner surface 650a of the hole 650. The hook portion 630 may limit a movement range of the protection member 410 by being contacted with the inner surface 650a of the hole 650. The hook portion 630 may reduce separation of the protection member 410 from the housing 200 while a state of the electronic device 101 is changed, by limiting the movement range of the protection member 410.

For example, the inner wall 452 may include a support portion 452a in which the hole 650 at least partially penetrated by the hook portion 630 is formed. The support portion 452a may be partitioned or defined by the first guide rail 621 and the second guide rail 622. The support portion 452a may be positioned, for example, between the first guide portion 611 and the second guide portion 612 of the protection member 410. For example, when referring to FIGS. 6C and 6D sequentially, the hook portion 630 may be raised in the first direction 501 along the protection member 410 that is raised (e.g., through the lifting portions 521 and 522). The inner surface 650a of the hole 650 may limit the movement of the protection member 410 in the first direction 501 by being contacted with the hook portion 630. By limiting the movement of the protection member 410 in the first direction 501, the electronic device 101 may reduce the separation of the protection member 410 from the housing 200 while the state of the electronic device 101 is changed. However, an embodiment supported by the present disclosure is not limited thereto.

For example, although not illustrated, the hook portion 630 may protrude from the protection member 410 toward the outer wall 451 of the seating groove 450. The hole 650 may accommodate the hook portion 630, by being formed on the outer wall 451 to limit a movement range of the hook portion 630. For example, unlike the illustration, the guide rails 621 and 622 may be formed in a slot shape forming a closed surface other than a slit shape with an end open. The guide rails 621 and 622 may limit the movement of the guide portions 611 and 612 accommodated in each of the guide rails 621 and 622, by forming a closed curved surface, respectively. However, the above-described embodiments are merely exemplary, and the electronic device 101 may include structures and/or configurations formed in the housing 200 and/or the protection member 410 to guide the movement direction and the position of the protection member 410.

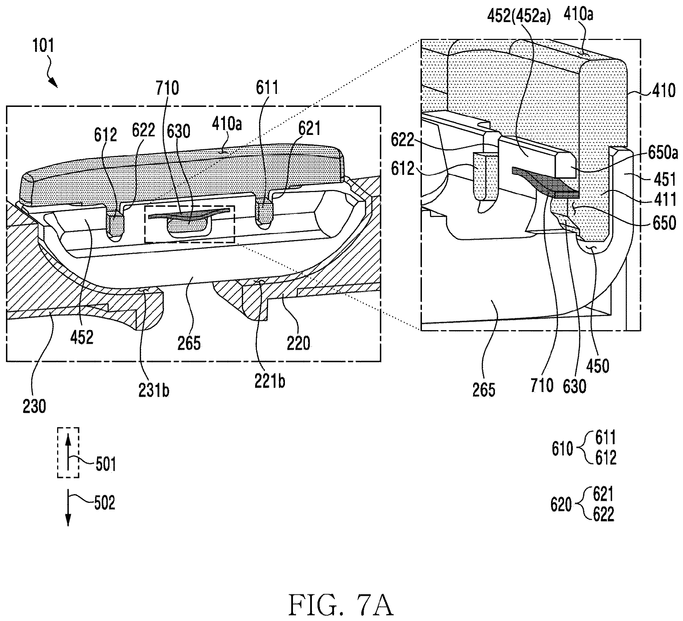

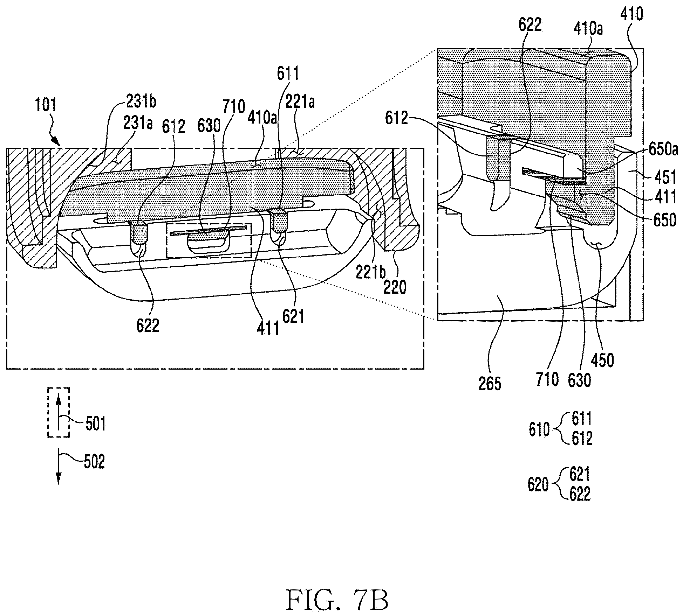

FIG. 7A illustrates a portion of an exemplary electronic device in a first state. FIG. 7B illustrates a portion of an exemplary electronic device in a second state.

Referring to FIGS. 7A and 7B, an electronic device 101 may include a housing 200 including a first housing part 210, a second housing part 220, a third housing part 230, a first hinge housing part (e.g., the first hinge housing part 255 of FIG. 4C) disposed at least partially between the first housing part 210 and the second housing part 220 and having a first width (e.g., the w1 of FIG. 3A), and a second hinge housing part 265 disposed at least partially between the second housing part 220 and the third housing part 230 and having a second width (e.g., the w2 of FIG. 3A) greater than the first width w1. The electronic device 101 may include a first hinge assembly (e.g., the first hinge assembly 250 of FIG. 2B) accommodated at least partially in the first hinge housing part 255 and rotatably coupling the first housing part 210 and the second housing part 220, and a second hinge assembly (e.g., the second hinge assembly 260 of FIG. 3A) at least partially accommodated in the second hinge housing part 265 and rotatably coupling the second housing part 220 and the third housing part 230. The electronic device 101 may include a protection member 410 disposed adjacent to a longitudinal end portion of the second hinge housing part 265. As the third housing part 230 is folded or unfolded with respect to the second housing part 220, the protection member 410 may be configured to move, with respect to the second hinge housing part 265, in a first direction 501 facing away from the second hinge housing part 265 and a second direction 502 opposite to the first direction 501. However, an embodiment supported by the present disclosure is not limited thereto, and the electronic device 101 may include the structures and/or the configurations (e.g., the protection covers 215, 225, and 235, the display portions 241, 242, 243, 244, and 245, the cover member 420, the protrusion 415 of the protection member 410, the seating groove 450, the outer wall 451, the inner wall 452, the one or more protrusions 510, the one or more lifting portions 520, the guide portion 610, the guide rail 620, the hook portion 630, and the hole 650) described in FIGS. 4A to 6D. Hereinafter, an overlapping description of structures and/or configurations having the same reference numerals as the structures and/or the configurations described in FIGS. 4A to 6D may be omitted.

The electronic device 101 may further include an elastic member 710 disposed to provide elastic support between the protection member 410 and the second hinge housing part 265. The elastic member 710 may be configured to provide a repulsive force to the hook portion 630 by being pressed by the hook portion 630 of the protection member 410. For example, when referring to FIG. 7A, the elastic member 710 may fasten the protection member 410 (or a seating portion 411 of the protection member 410) in the seating groove 450 by pressing the hook portion 630 toward the seating groove 450 (e.g., in the second direction 502). For example, the elastic member 710 may be disposed above the hook portion 630. The elastic member 710 may maintain contact with the hook portion 630 while a state of the electronic device 101 is changed, by being elastically deformable. For example, the elastic member 710 may be positioned at least partially between the hole 650 of the second hinge housing part 265 and the hook portion 630 of the protection member 410. For example, the elastic member 710 may be attached or coupled to an inner surface 650a of the hole 650. However, an embodiment supported by the present disclosure is not limited thereto.

For example, the elastic member 710 may be coupled or attached to a portion of the outer wall 451 and the inner wall 452 of the seating groove 450 accommodating at least a portion of the protection member 410. The elastic member 710 may provide the elastic support to the protection member 410, by being configured to press guide portions 611 and 612 and/or the hook portion 630 of the protection member 410. However, the above-mentioned embodiments are exemplary and it should be noted that a disposition relationship of the elastic member 710 in the electronic device 101 is not limited.

For example, when referring to FIG. 7A and FIG. 7B sequentially, the hook portion 630 may be moved in the first direction 501 along the protection member 410 that moves in the first direction 501 with respect to the second hinge housing part 265. The elastic member 710 may provide a repulsive force to the hook portion 630 in the second direction 502 opposite to the first direction 501, by being pressed by the hook portion 630 moving in the first direction 501. For example, when referring to FIG. 7B and FIG. 7A sequentially, the hook portion 630 may be moved in the second direction 502 along the protection member 410 that moves in the second direction 502 with respect to the second hinge housing part 265. The elastic member 710 may help movement of the protection member 410 in the second direction 502, by providing the repulsive force to the hook portion 630 in the second direction 502 while the hook portion 630 is moved in the second direction 502. The protection member 410 may be naturally moved in the second direction 502 based on the repulsive force exerted from the elastic member 710 to the hook portion 630. However, an embodiment supported by the present disclosure is not limited thereto.

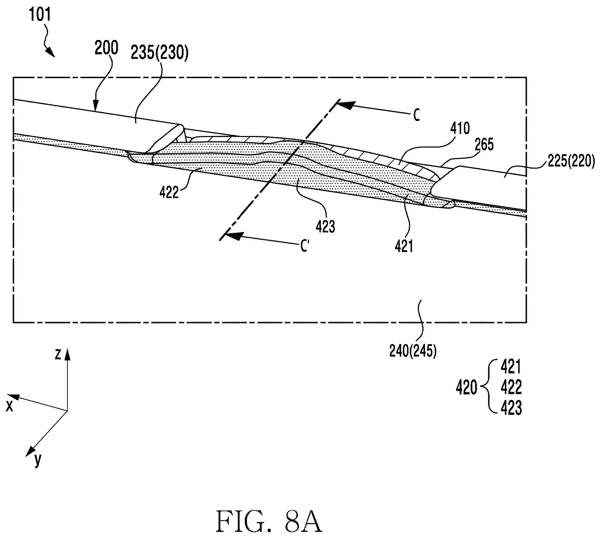

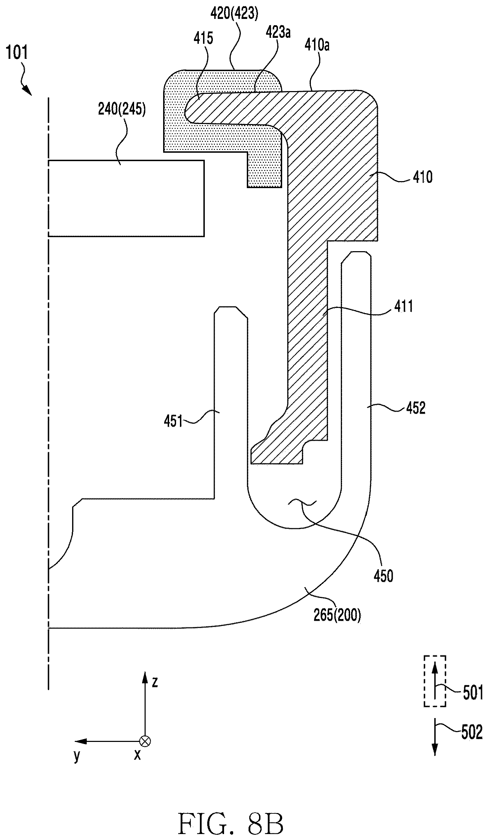

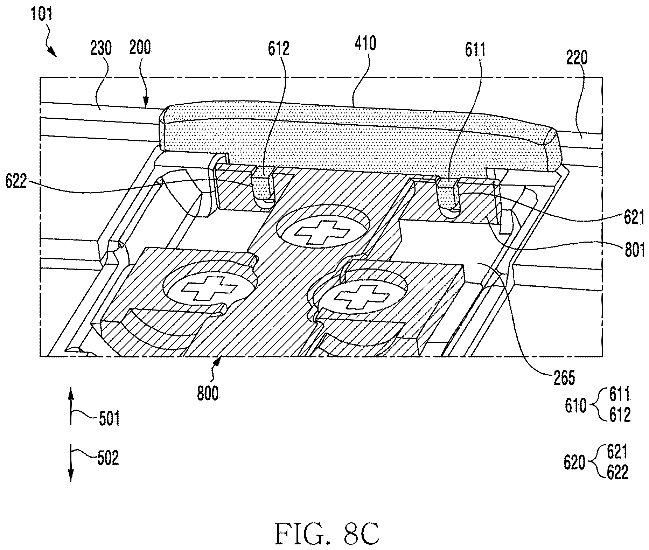

FIG. 8A illustrates a portion of an exemplary electronic device. FIG. 8B is a partial cross-sectional view of an exemplary electronic device cut along line C-C' of FIG. 8A. FIG. 8C illustrates a portion of an exemplary electronic device.

Referring to FIGS. 8A, 8B, and 8C, an electronic device 101 may include a housing 200 including a first housing part 210, a second housing part 220, a third housing part 230, a first hinge housing part (e.g., the first hinge housing part 255 of FIG. 4C) disposed at least partially between the first housing part 210 and the second housing part 220 and having a first width (e.g., the w1 of FIG. 3A), and a second hinge housing part 265 disposed at least partially between the second housing part 220 and the third housing part 230 and having a second width (e.g., the w2 of FIG. 3A) greater than the first width w1. The electronic device 101 may include a first hinge assembly (e.g., the first hinge assembly 250 of FIG. 2B) accommodated at least partially in the first hinge housing part 255 and rotatably coupling the first housing part 210 and the second housing part 220, and a second hinge assembly (e.g., the second hinge assembly 260 of FIG. 3A) at least partially accommodated in the second hinge housing part 265 and rotatably coupling the second housing part 220 and the third housing part 230. The electronic device 101 may include a protection member 410 disposed adjacent to a longitudinal end portion of the second hinge housing part 265. As the third housing part 230 is folded or unfolded with respect to the second housing part 220, the protection member 410 may be configured to move, with respect to the second hinge housing part 265, in a first direction 501 facing away from the second hinge housing part 265 and a second direction 502 opposite to the first direction 501. However, an embodiment supported by the present disclosure is not limited thereto, and the electronic device 101 may include the structures and/or the configurations (e.g., the protection covers 215, 225, and 235, the display portions 241, 242, 243, 244, and 245, the cover member 420, the protrusion 415 of the protection member 410, the seating groove 450, the outer wall 451, the inner wall 452, the one or more protrusions 510, the one or more lifting portions 520, the guide portion 610, the guide rail 620, the hook portion 630, the hole 650, and the elastic member 710) described in FIGS. 4A to 7D. Hereinafter, an overlapping description of structures and/or configurations having the same reference numerals as the structures and/or the configurations described in FIGS. 4A to 7B may be omitted.

Referring to FIGS. 8A and 8B, the cover member 420 may be disposed to cover at least a portion of a periphery of the fifth display portion 245 to prevent inflow of foreign substances between the fifth display portion 245 and the second hinge housing part 265. The cover member 420 may be supported by the protection member 410 disposed adjacent to the cover member 420.

For example, the cover member 420 may be disposed above the periphery of the fifth display portion 245. For example, the cover member 420 may be at least partially disposed between the second protection cover 225 coupled to the second housing part 220 and the third protection cover 235 coupled to the third housing part 230. For example, the cover member 420 may face a portion of a front surface (e.g., the front surface 245a of FIG. 4B) of the fifth display portion 245 and/or a portion of a side surface (e.g., the side surface 245c of FIG. 4B) of the fifth display portion 245 by being disposed along the periphery of the fifth display portion 245. For example, the cover member 420 may be elastically deformed while a state of the electronic device 101 is changed. The cover member 420 may maintain a position on the fifth display portion 245 while the state of the electronic device 101 is changed, by being supported by the protrusion 415 of the protection member 410. However, an embodiment supported by the present disclosure is not limited thereto.

As the third housing part 230 is folded or unfolded with respect to the second housing part 220, the cover member 420 may be coupled to the protection member 410 so that at least a portion of the cover member 420 moves in the first direction 501 and the second direction 502 in which the protection member 410 moves with respect to the second hinge housing part 265. The cover member 420 may include a first cover portion 421 disposed at least partially under the first protection cover 215, a second cover portion 422 disposed at least partially under the second protection cover 225, and a third cover portion 423 extending from the first cover portion 421 to the second cover portion 422. By being coupled to the protrusion 415 of the protection member 410, the third cover portion 423 among the cover portions 421, 422, and 423 may be moved in the first direction 501 and the second direction 502, which are movement directions of the protection member 410, as the protection member 410 moves. For example, the third cover portion 423 may include a fastening groove 423a coupled to the protrusion 415 of the protection member 410. By accommodating the protrusion 415 of the protection member 410, the third cover portion 423 may be moved or elastically deformed according to movement of the protection member 410. However, an embodiment supported by the present disclosure is not limited thereto. By including the cover member 420 coupled to the protection member 410 so as to at least partially move together with the protection member 410, the electronic device 101 may may readjust a position of the cover member 420 using the movement of the protection member 410 and reduce inflow of foreign substances through a gap between the fifth display portion 245 and the housing 200.

Referring to FIG. 8C, the housing 200 may include a bracket 800 disposed at least partially in the second hinge housing part 265 and coupled to the second hinge housing part 265. Unlike illustrated in FIGS. 6A to 7B, the guide rail 620 for guiding movement of the guide portion 610 of the protection member 410 may be formed in the bracket 800. For example, the protection member 410 may be seated in the seating groove 450 of the second hinge housing part 265. Guide portions 611 and 612 protruding from the protection member 410 may protrude toward a sidewall 801 of the bracket 800. The sidewall 801 may include guide rails 621 and 622 for accommodating the guide portions 611 and 612 and guiding movement of the guide portions 611 and 612 in the first direction 501 and the second direction 502. However, as described above, it should be noted that since the electronic device 101 may include internal structures and/or configurations for guiding the movement of the protection member 410 or limiting a movement range of the protection member 410 in addition to the second hinge housing part 265, an embodiment supported by the present disclosure is not limited to the above-mentioned embodiments.

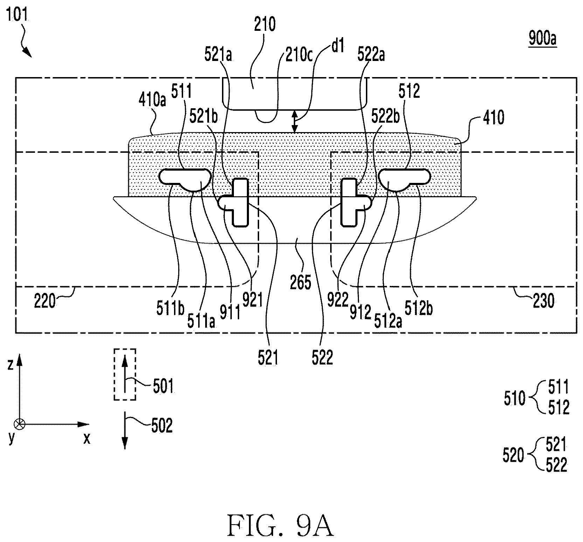

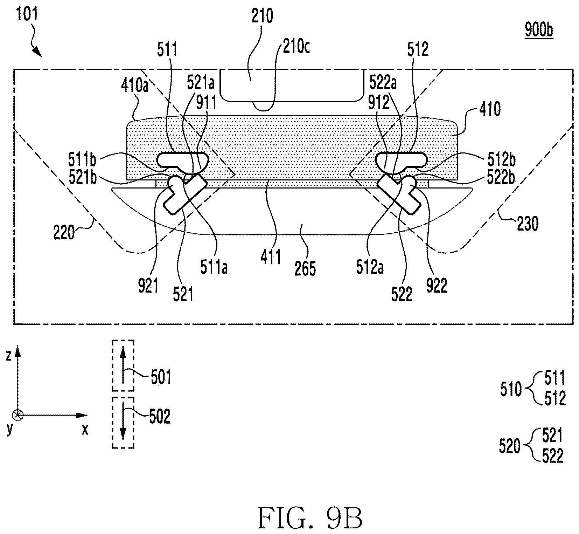

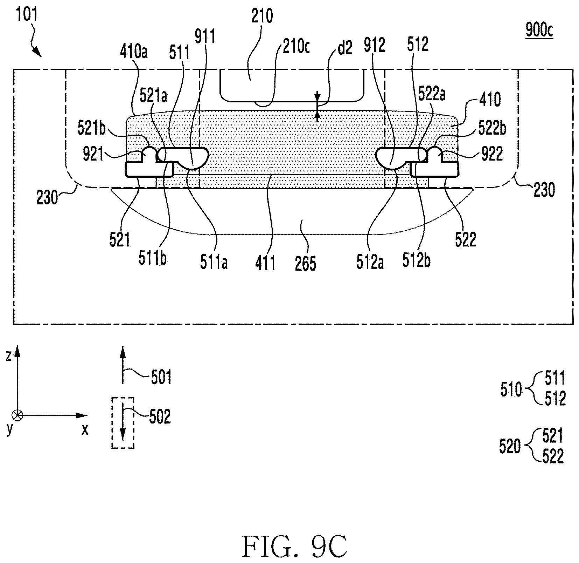

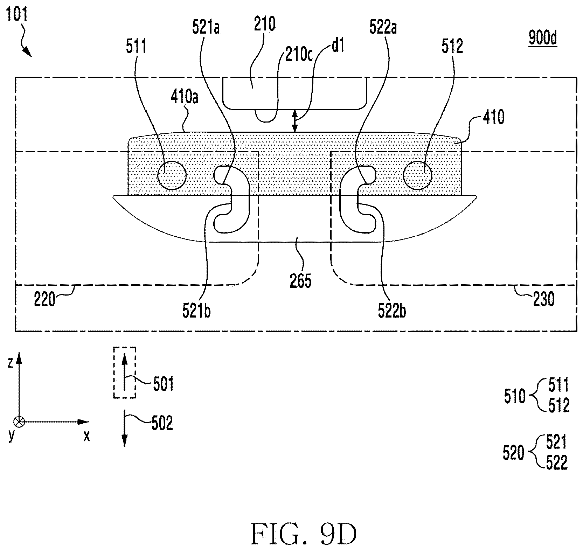

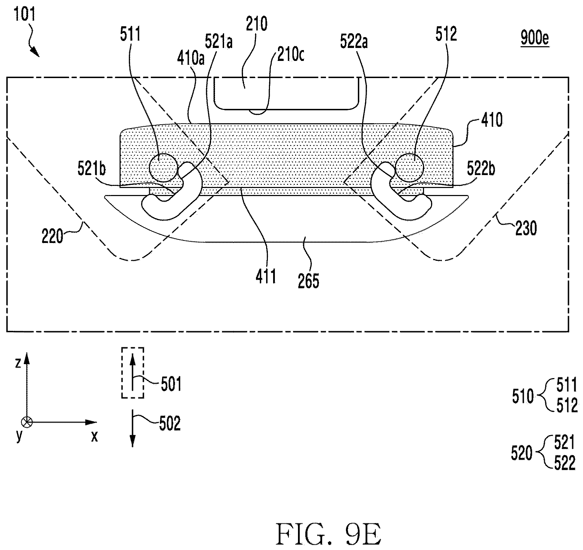

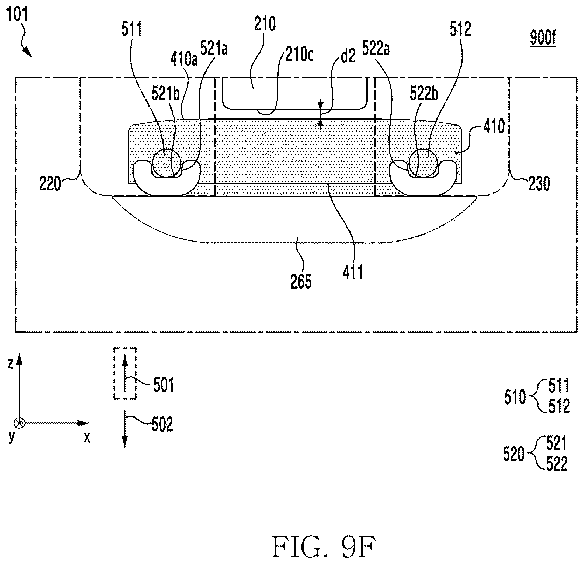

FIGS. 9A, 9B, and 9C illustrate movement of a protection member according to a state change of an exemplary electronic device. FIGS. 9D, 9E, and 9F illustrate movement of a protection member according to a state change of an exemplary electronic device.

Referring to FIGS. 9A, 9B, 9C, 9D, 9E, and 9F, an electronic device 101 may include a housing 200 including a first housing part 210, a second housing part 220, a third housing part 230, a first hinge housing part (e.g., the first hinge housing part 255 of FIG. 4C) disposed at least partially between the first housing part 210 and the second housing part 220 and having a first width (e.g., the w1 of FIG. 3A), and a second hinge housing part 265 disposed at least partially between the second housing part 220 and the third housing part 230 and having a second width (e.g., the w2 of FIG. 3A) greater than the first width w1. The electronic device 101 may include a first hinge assembly (e.g., the first hinge assembly 250 of FIG. 2B) accommodated at least partially in the first hinge housing part 255 and rotatably coupling the first housing part 210 and the second housing part 220, and a second hinge assembly (e.g., the second hinge assembly 260 of FIG. 3A) at least partially accommodated in the second hinge housing part 265 and rotatably coupling the second housing part 220 and the third housing part 230. The electronic device 101 may include a protection member 410 disposed adjacent to a longitudinal end portion of the second hinge housing part 265. As the third housing part 230 is folded or unfolded with respect to the second housing part 220, the protection member 410 may be configured to move, with respect to the second hinge housing part 265, in a first direction 501 facing away from the second hinge housing part 265 and a second direction 502 opposite to the first direction 501. However, an embodiment supported by the present disclosure is not limited thereto, and the electronic device 101 may include the structures and/or the configurations (e.g., the protection covers 215, 225, and 235, the display portions 241, 242, 243, 244, and 245, the cover member 420, the protrusion 415 of the protection member 410, the seating groove 450, the outer wall 451, the inner wall 452, the one or more protrusions 510, the one or more lifting portions 520, the guide portion 610, the guide rail 620, the hook portion 630, the hole 650, the elastic member 710, the cover portions 421, 422, and 423, and the bracket 800) described in FIGS. 4A to 8C. Hereinafter, an overlapping description of structures and/or configurations having the same reference numerals as the structures and/or the configurations described in FIGS. 4A to 8C may be omitted.

As exemplarily illustrated in FIGS. 9A to 9F, while the third housing part 230 is unfolded or folded with respect to the second housing part 220, the one or more protrusions 510 of the protection member 410 for moving the protection member 410 (e.g., in the first direction 501 or in the second direction 502 opposite to the first direction 501) and/or the one or more lifting portions 520 corresponding to each of the one or more protrusions 510 may have various shapes.

For example, when referring to FIGS. 9A, 9B, and 9C, a first protrusion 511 may include a first portion 911 defining a first guide surface 511a and a second guide surface 511b extending from the first guide surface 511a. A first lifting portion 521 configured to push up the first protrusion 511 may include a first support surface 521a configured to be contacted with the first guide surface 511a and a first support portion 921 configured to define a second support surface 521b extending from the first support surface 521a. A second protrusion 512 may include a second portion 912 defining a third guide surface 512a, and a fourth guide surface 512b extending from the third guide surface 512a. A second lifting portion 522 configured to push up the second protrusion 512 may include a third support surface 522a configured to be contacted with the third guide surface 512a and a second support portion 922 configured to define a fourth support surface 522b extending from the third support surface 522a.

When referring to FIGS. 9A, 9B, and 9C sequentially, while changing from a state 900a in which the third housing part 230 is fully unfolded with respect to the second housing part 220, through a state 900b, to a state 900c in which the third housing part 230 is fully folded with respect to the second housing part 220, each of the portions 911 and 912 of the protrusions 511 and 512 may guide rotation and/or movement of the lifting portions 521 and 522. For example, while the third housing part 230 is folded with respect to the second housing part 220, the first support surface 521a may guide movement of the first lifting portion 521 by sliding along the first guide surface 511 a of the curved first portion 911. The first support portion 921 of the first lifting portion 521 may push up the first protrusion 511 in the first direction 501 through contact between the second support surface 521b extending from the first support surface 521a and the second guide surface 511b of the first protrusion 511. For example, while the third housing part 230 is folded with respect to the second housing part 220, the third support surface 522a may guide movement of the second lifting portion 522 by sliding along the third guide surface 512a of the curved second portion 912. The second support portion 922 of the second lifting portion 522 may push up the second protrusion 512 in the first direction 501 through contact between the fourth support surface 522b extending from the third support surface 522a and the fourth guide surface 512b of the second protrusion 512. However, an embodiment supported by the present disclosure is not limited thereto.

When referring to FIGS. 9D, 9E, and 9F sequentially, while changing from the state 900a in which the third housing part 230 is fully unfolded with respect to the second housing part 220, through the state 900b, to the state 900c in which the third housing part 230 is fully folded with respect to the second housing part 220, each of the portions 911 and 912 of the protrusions 511 and 512 may guide the rotation and/or the movement of the lifting portions 521 and 522. For example, each of the protrusions 511 and 512 may have a circular shape. The second support surface 521b of the first lifting portion 521 may be recessed from the first support surface 521a. The fourth support surface 522b of the second lifting portion 522 may be recessed from the third support surface 522a. For example, while the third housing part 230 is folded with respect to the second housing part 220, the first support surface 521a may guide the movement of the first lifting portion 521 by sliding through contact with a surface of the first protrusion 511. The second support surface 521b may push up the first protrusion 511 in the first direction 501, by moving in the first direction 501 along the second housing part 220. For example, while the third housing part 230 is folded with respect to the second housing part 220, the third support surface 522a may guide the movement of the second lifting portion 522, by sliding through contact with a surface of the second protrusion 512. The fourth support surface 522b may push up the second protrusion 512 in the first direction 501 by moving in the first direction 501 along the third housing part 230. However, the above-mentioned embodiments are merely exemplary, and the one or more protrusions 510 and/or the one or more lifting portions 520 may have various shapes to guide each other's positions or move the one or more protrusions 510.

As described above, an electronic device (e.g., the electronic device 101 of FIG. 1) comprises a housing (e.g., the housing 200 of FIG. 2A) including a first housing part (e.g., the first housing part 210 of FIG. 2A), a second housing part (e.g., the second housing part 220 of FIG. 2A), and a third housing part (e.g., the third housing part 230 of FIG. 2A). The electronic device comprises a first hinge structure (e.g., the first hinge assembly 250 of FIG. 3A) rotatably coupling the first housing part and the second housing part, a second hinge structure (e.g., the second hinge assembly 260 of FIG. 3A) rotatably coupling the second housing part and the third housing part, a first hinge housing (e.g., the first hinge housing part 255 of FIG. 4C) to cover a portion of the first hinge structure, and a second hinge housing (e.g., the second hinge housing 265 of FIG. 4C) to cover a portion of the second hinge structure, the second hinge housing being wider than the first hinge housing. The electronic device comprises a foldable display (e.g., the flexible display 240 of FIG. 2A) supported by the first housing part, the second housing part and the third housing part, the foldable display including a bendable display portion (e.g., the fifth display portion 245 of FIG. 2A) corresponding to the second hinge structure, the foldable display being configured to be bent in a single-folded state or a multi-folded state of the electronic device. The electronic device may comprise a protection member (e.g., the protection member 410 of FIG. 4A), accommodated in a longitudinal end portion of the second hinge housing, adjacent to a periphery of the bendable display portion of the foldable display. The protection member is configured to, when the third housing part is rotated with respect to the second housing part from the single-folded state to the multi-folded state of the electronic device, move from a first position to a second position with respect to the second hinge housing. The protection member may reduce damage to the bendable display portion by the first housing part moved due to an external impact, and increase the usability of the electronic device.

For example, the electronic device may further comprise a cover member (e.g., the cover member 420 of FIG. 4A), disposed to cover at least a portion of the periphery of the bendable display portion. While changing from an unfolded state to the multi-folded state in which a side surface (e.g., the side surface 210c of FIG. 4C) of the first housing part is facing the bendable display portion of the foldable display, the protection member may move in a first vertical direction (e.g., the first direction 501 of FIG. 5B) with respect to the cover member. While changing from the multi-folded state to the unfolded state, the protection member may move in a second vertical direction (e.g., the second direction 502 of FIG. 5B) opposite to the first direction with respect to the cover member.

For example, the protection member may include a first protrusion (e.g., the first protrusion 511 of FIG. 5A) protruding from the protection member toward an inner surface of the second housing part, and a second protrusion (e.g., the second protrusion 512 of FIG. 5A) protruding from the protection member toward an inner surface of the third housing part.

The housing may further include a first lifting portion (e.g., the first lifting portion 521 of FIG. 5A), formed on the inner surface of the second housing part, configured to push up the first protrusion, and a second lifting portion (e.g., the second lifting portion 522 of FIG. 5A), formed on the inner surface of the third housing part, configured to push up the second protrusion. The first lifting portion and the second lifting portion may be respectively contacted with the first protrusion and the second protrusion in a state in which an angle (e.g., the a of FIG. 5C) between the first housing part and the second housing part is within a designated angle range.

For example, the designated angle range may be 45 degrees to 90 degrees.

For example, a movement range of the protection member with respect to the second hinge housing may be 2mm to 4mm.

For example, the protection member may include a guide portion (e.g., the guide portion 610 of FIG. 6A) sliding with respect to the second hinge housing as the protection member moves with respect to the second hinge housing. The second hinge housing may include a seating groove (e.g., the seating groove 450 of FIG. 4B) in which the protection member is seated, and a guide rail (e.g., the guide rail 620 of FIG. 6A), formed on a sidewall (e.g., the inner wall 452 of FIG. 4B) of the seating groove, guiding the guide portion to be moved in a first vertical direction facing away from the second hinge housing or the second vertical direction opposite to the first vertical direction.

For example, the protection member may further include a hook portion (e.g., the hook portion 630 of FIG. 6A) protruding from the protection member toward the sidewall. The second hinge housing may further include a hole (e.g., the hole 650 of FIG. 6B), forming a space accommodating the hook portion to be movable, limiting movement of the hook portion to prevent the protection member from separated from the second hinge housing in a state in which the third housing part is unfolded with respect to the second housing part.

For example, the electronic device may further comprise an elastic member (e.g., the elastic member 710 of FIG. 7A) , disposed to provide elastic support between the protection member and the second hinge housing. The elastic member may be configured to provide a repulsive force to the hook portion by being pressed by the hook portion.

For example, the elastic member may be positioned at least partially between the hole and the hook portion. The protection member may be configured to move in the second vertical direction based on the repulsive force exerted to the hook portion.

For example, the housing may include a first protection cover (e.g., the first protection cover 215 of FIG. 5A), coupled to the first housing part, and covering a portion of a periphery of the foldable display, a second protection cover (e.g., the second protection cover 225 of FIG. 5A) , coupled to the second housing part, and covering a portion of the periphery of the foldable display, and a third protection cover (e.g., the third protection cover 235 of FIG. 5A) , coupled to the third housing part, and covering a portion of the periphery of the foldable display. The protection member may be at least partially disposed between the second protection cover and the third protection cover when viewed from above the electronic device.

For example, the electronic device may further comprise a cover member, disposed to cover at least a portion of a periphery of the bendable display portion to prevent inflow of foreign substances between the bendable display portion and the second hinge housing, supported by the protection member. The cover member may be coupled to the protection member such that at least a portion of the cover member is moved together with the protection member, as the third housing part is folded or unfolded with respect to the second housing part.

For example, the cover member may include a first cover portion (e.g., the first cover portion 421 of FIG. 8A) fastened to the second housing part, a second cover portion (e.g., the second cover portion 422 of FIG. 8A) fastened to the third housing part, and a third cover portion (e.g., the third cover portion 423 of FIG. 8A), disposed between the first cover portion and the second cover portion, accommodating a portion of the protection member to be moved together with the protection member.

For example, a width of the first housing part may be smaller than a width of the second housing part and a width of the third housing part.

For example, the protection member may be spaced apart from the first housing part in the multi-folded state in which the first housing part and third housing part are folded with respect to the second housing part respectively.

For example, a distance (e.g., the d2 of FIG. 5D) between the protection member and a side surface of the first housing part facing the protection member in the multi-folded state may be 0.05mm to 2mm.

As described above, a multi-foldable electronic device (e.g., the electronic device 101 of FIG. 1) may comprise a foldable housing (e.g., the housing 200 of FIG. 2A) including a first housing part (e.g., the first housing part 210 of FIG. 2A), a second housing part (e.g., the second housing part 220 of FIG. 2A), a third housing part (e.g., the third housing part 230 of FIG. 2A), a first hinge housing part (e.g., the first hinge housing part 255 of FIG. 4C), disposed at least partially between the first housing part and the second housing part, having a first width (e.g., the w1 of FIG. 3A), and a second hinge housing part (e.g., the second hinge housing part 265 of FIG. 4B), disposed at least partially between the second housing part and the third housing part, having a second width (e.g., the w2 of FIG. 3A) greater than the first width. The multi-foldable electronic device may comprise a first hinge assembly (e.g., the first hinge assembly 250 of FIG. 2B), at least partially accommodated in the first hinge housing part, rotatably coupling the first housing part and the second housing part, a second hinge assembly (e.g., the second hinge assembly 260 of FIG. 2B), at least partially accommodated in the second hinge housing part, rotatably coupling the second housing part and the third housing part, a flexible display (e.g., the flexible display 240 of FIG. 2A) coupled to the foldable housing and configured to be partially bent by the first hinge assembly and the second hinge assembly, and a protection member (e.g., the protection member 410 of FIG. 4A) disposed adjacent to a longitudinal end portion of the second hinge housing part. The protection member may be configured to move, with respect to the second hinge housing part, in a first direction (e.g., the first direction 501 of FIG. 5B) facing away from the second hinge housing part and in a second direction (e.g., the second direction 502 of FIG. 5B) opposite to the first direction, respectively, as the third housing part is folded or unfolded with respect to the second housing part.

For example, the protection member may include a first protrusion (e.g., the first protrusion 511 of FIG. 5A) protruding from the protection member toward an inner surface (e.g., the inner surface 221 of FIG. 5A) of the second housing part, and a second protrusion (e.g., the second protrusion 512 of FIG. 5A) protruding from the protection member toward an inner surface (e.g., the inner surface 231 of FIG. 5A) of the third housing part. The foldable housing may further include a first lifting portion (e.g., the first lifting portion 521 of FIG. 5A), formed on the inner surface of the second housing part, configured to push up the first protrusion, and a second lifting portion (e.g., the second lifting portion 522 of FIG. 5A), formed on the inner surface of the third housing part, configured to push up the second protrusion. The first lifting portion and second lifting portion may be respectively contacted with the first protrusion and second protrusion in a state in which an angle (e.g., the a of FIG. 5C) between the second housing part and the third housing part is within a designated angle range.

For example, the designated angle range may be 45 degrees to 90 degrees.

For example, a movement range (e.g., the r of FIG. 5D) of the protection member with respect to the second hinge housing part may be 2mm to 4mm.

For example, the protection member may include a guide portion (e.g., the guide portion 610 of FIG. 6A) sliding with respect to the second hinge housing part as the protection member moves with respect to the second hinge housing part. The second hinge housing part may include a seating groove in which the protection member is seated, and a guide rail (e.g., the guide rail 620 of FIG. 6A), formed on a sidewall of the seating groove, guiding the guide portion to be moved in the first direction or the second direction.

For example, the protection member may further include a hook portion (e.g., the hook portion 630 of FIG. 6A) protruding from the protection member toward the sidewall. The second hinge housing part may further include a hole (e.g., the hole 650 of FIG. 6B), forming a space accommodating the hook portion to be movable, limiting movement of the hook portion to prevent the protection member from separated from the second hinge housing part in a state in which the third housing part is unfolded with respect to the second housing part.

For example, the multi-foldable electronic device may further comprise an elastic member (e.g., the elastic member 710 of FIG. 7A), disposed to provide elastic support between the protection member and the second hinge housing part. The elastic member may be configured to provide a repulsive force to the hook portion by being pressed by the hook portion.

For example, the elastic member may be positioned at least partially between the hole and the hook portion. The protection member may be configured to move in the second direction based on the repulsive force exerted to the hook portion.

For example, a flexible display may include a first display portion (e.g., the first display portion 241 of FIG. 2A) coupled to the first housing part, a second display portion (e.g., the second display portion 242 of FIG. 2A) coupled to the second housing part, a third display portion (e.g., the third display portion 243 of FIG. 2A) coupled to the third housing part, a fourth display portion (e.g., the fourth display portion 244 of FIG. 2A), extending from the first display portion to the second display portion, configured to be bent by the first hinge assembly, and a fifth display portion (e.g., the fifth display portion 245 of FIG. 2A), extending from the second display portion to the third display portion, configured to be bent by the second hinge assembly. The protection member may be disposed to face a side surface of the fifth display portion.

For example, the foldable housing may include a first protection cover (e.g., the first protection cover 215 of FIG. 3A), coupled to the first housing part, disposed to cover a portion of a periphery of the first display portion, a second protection cover (e.g., the second protection cover 225 of FIG. 3A), coupled to the second housing part, disposed to cover a portion of a periphery of the second display portion, and a third protection cover (e.g., the third protection cover 235 of FIG. 3A), coupled to the third housing part, disposed to cover a portion of a periphery of the third display portion. The protection member may be at least partially disposed between the second protection cover and the third protection cover when viewed from above the multi-foldable electronic device.

For example, the multi-foldable electronic device may further comprise a cover member (e.g., the cover member 420 of FIG. 4A), disposed to cover at least a portion of a periphery of the fifth display portion to prevent inflow of foreign substances between the fifth display portion and the second hinge housing part, supported by the protection member.

For example, the cover member may be coupled to the protection member such that at least a portion of the cover member is moved in the first direction or the second direction with respect to the second hinge housing part, as the foldable housing is folded or unfolded by the second hinge assembly.

For example, a width of the first housing part may be smaller than a width of the second housing part and a width of the third housing part.

For example, the protection member may be spaced apart from the first housing part in a state in which the first housing part and the third housing part are folded with respect to the second housing part, respectively.

For example, a distance (e.g., the d2 of FIG. 5D) between the protection member and a side surface (e.g., the side surface 210c of FIG. 4C) of the first housing part facing the protection member may be 0.05mm to 2mm, in the state in which the first housing part and the third housing part are folded with respect to the second housing part, respectively.

As described above, a multi-foldable electronic device may comprise a foldable housing including a first housing part, a second housing part, a third housing part, a first hinge housing part, disposed at least partially between the first housing part and the second housing part, having a first width, and a second hinge housing part, disposed at least partially between the second housing part and the third housing part, having a second width greater than the first width. The multi-foldable electronic device may comprise a first hinge assembly, at least partially accommodated in the first hinge housing part, rotatably coupling the first housing part and the second housing part, and a second hinge assembly, at least partially accommodated in the second hinge housing part, rotatably coupling the second housing part and the third housing part. The multi-foldable electronic device may comprise a flexible display including a first display portion coupled to the first housing part, a second display portion coupled to the second housing part, a third display portion coupled to the third housing part, a fourth display portion, between the first display portion and the second display portion, configured to be bent by the first hinge assembly, and a fifth display portion, between the second display portion and the third display portion, configured to be bent by the second hinge assembly. The multi-foldable electronic device may comprise a protection member movably coupled to an end portion of the second hinge housing part to at least partially cover a side surface of the fifth display portion. The protection member may be configured to move, with respect to the second hinge housing part, between a first position and a second position raised from the first position with respect to the second hinge housing part, as the third housing part is folded or unfolded with respect to the second housing part.

For example, the protection member may include a first protrusion protruding from the protection member toward an inner surface of the second housing part, and a second protrusion protruding from the protection member toward an inner surface of the third housing part. The housing may include a first lifting portion, formed on the inner surface of the second housing part, configured to push up the first protrusion, and a second lifting portion, formed on the inner surface of the third housing part, configured to push up the second protrusion. The first lifting portion and the second lifting portion may be respectively contacted with the first protrusion and the second protrusion in a state in which an angle a between the first housing part and the second housing part is within a designated angle range.

For example, the protection member may include a guide portion sliding with respect to the second housing part as the protection member moves with respect to the second hinge housing part. The second hinge housing part may include a seating groove in which the protection member is seated, and a guide rail, formed on a sidewall of the seating groove, guiding the guide portion to be moved in a first direction or a second direction opposite to the first direction.

For example, the protection member may further include a hook portion protruding from the protection member toward the sidewall. The second hinge housing part may further include a hole, forming a space accommodating the hook portion to be movable, limiting movement of the hook portion to prevent the protection member from separated from the second hinge housing part in a state in which the third housing part is unfolded with respect to the second housing part.

For example, the multi-foldable electronic device may further comprise a cover member, disposed to cover at least a portion of a periphery of the fifth display portion to prevent inflow of foreign substances between the fifth display portion and the second hinge housing part, supported by the protection member. The cover member may be coupled to the protection member such that at least a portion of the cover member is moved together with the cover member with respect to the second hinge housing part, as the foldable housing is folded or unfolded by the second hinge assembly.

As described above, an electronic device (e.g., the electronic device 101 of FIG. 1) may comprise a foldable housing (e.g., the housing 200 of FIG. 2A) including a first housing portion (e.g., the first housing part 210 of FIG. 2A), a second housing portion (e.g., the second housing part 220 of FIG. 2A), a third housing portion (e.g., the third housing part 230 of FIG. 2A), a first hinge housing portion (e.g., the first hinge housing part 255 of FIG. 4C), disposed at least partially between the first housing portion and the second housing portion, having a first width (e.g., the w1 of FIG. 3A), and a second hinge housing portion (e.g., the second hinge housing part 265 of FIG. 4C), disposed at least partially between the second housing portion and the third housing portion, having a second width (e.g., the w2 of FIG. 3A) greater than the first width. The electronic device 101 may comprise a first hinge assembly (e.g., the first hinge assembly 250 of FIG. 3A), at least partially accommodated in the first hinge housing portion, rotatably connecting the first housing portion and the second housing portion, and a second hinge assembly (e.g., the second hinge assembly 260 of FIG. 3A), at least partially accommodated in the second hinge housing portion, rotatably connecting the second housing portion and the third housing portion. The electronic device 101 may comprise a flexible display (e.g., the flexible display 240 of FIG. 2A) including a first display region (e.g., the first display portion 241 of FIG. 2A), a second display region (e.g., the second display portion 242 of FIG. 2A) and a third display region (e.g., the third display portion 243 of FIG. 2A) respectively accommodated in the first housing portion, the second housing portion and the third housing portion. The electronic device 101 may comprise a display protection member (e.g., the protection member 410 of FIG. 4A) disposed adjacent to an end portion in a longitudinal direction thereof of the second hinge housing portion. The display protection member may be configured to move in a first direction (e.g., the first direction 501 of FIG. 5B) facing away from the second hinge housing portion and a second direction (e.g., the second direction 502 of FIG. 5B) opposite thereto, respectively, as the third housing portion is folded or unfolded with respect to the second housing portion.

For example, the display protection member may include a protrusion (e.g., the one or more protrusions 510 of FIG. 5B) formed on a first surface thereof and protruding toward an inner side surface of each of the second housing portion and the third housing portion. Each of the second housing portion and the third housing portion may include a lock portion (e.g., the one or more lifting portions 520 of FIG. 5B) formed not to contact the protrusion when the second housing portion and the third housing portion are fully unfolded, and formed to contact the protrusion when each of the second housing portion and the third housing portion is folded within a designated angle range with respect to the second hinge housing portion.

For example, the designated angle range may be 45 degrees to 90 degrees.

For example, when each of the second housing portion and the third housing portion is fully folded with respect to the second hinge housing portion, the display protection member may be moved by 0.2 mm to 0.4 mm.

For example, the display protection member may include a slide portion (e.g., the guide portion 610 of FIG. 6A) that is slidable with respect to the second hinge housing portion by being formed on a second surface opposite to the first surface. The second hinge housing portion may include a seating groove (e.g., the seating groove 450 of FIG. 4B) in which the display protection member may be seated, and a rail portion (e.g., the guide rail 620 of FIG. 6A) that is guide the slide portion to be moved in the first direction or the second direction by being formed on an inner sidewall (e.g., the inner wall 452 of FIG. 6A) of the seating groove.

For example, the second housing portion may include a separation prevention structure that prevents separation of the display protection member by being configured to support at least a portion of the display protection member when the second housing portion and the third housing portion are fully unfolded.

For example, the display protection member may include another protrusion (e.g., the hook portion 630 of FIG. 6A) formed on the second surface opposite to the first surface. The separation prevention structure may include a separation prevention hole (e.g., the hole 650 of FIG. 6B) that forms a space for accommodating the other protrusion so that the other protrusion is movable, and that is configured to support the protrusion on an inner wall thereof when the second housing portion and the third housing portion are fully unfolded.

For example, the slide portion may include a first slide portion (e.g., the first guide portion 611 of FIG. 6A) corresponding to the second housing portion and a second slide portion (e.g., the second guide portion 612 of FIG. 6A) corresponding to the third housing portion. The rail portion may include a first rail portion (e.g., the first guide rail 621 of FIG. 6A) corresponding to the first slide portion and a second rail portion (e.g., the second guide portion 622 of FIG. 6A) corresponding to the second slide portion.

For example, the other protrusion may be formed between the first slide portion and the second slide portion. The separation prevention hole may be formed between the first rail portion and the second rail portion.

For example, the electronic device may further include an elastic member (e.g., the elastic member 710 of FIG. 7A) that provides an elastic force between the display protection member and the second hinge housing portion by being positioned between the inner wall of the separation prevention hole and the other protrusion.

For example, the display protection member may be configured to move in the second direction as the protrusion moves in the second direction based on the elastic force.

For example, the electronic device may further include a lubrication member disposed between the protrusion and the lock portion, between the slide portion and the rail portion, or between the other protrusion and the separation prevention hole.

For example, the electronic device may further include a first protection cover (e.g., the first protection cover 215 of FIG. 3A) disposed to cover at least a portion of a first periphery of the first display region by being coupled to the first housing portion, a second protection cover (e.g., the second protection cover 225 of FIG. 3A) disposed to cover at least a portion of a second periphery of the second display region by being coupled to the second housing portion and, a third protection cover (e.g., the third protection cover 235 of FIG. 3A) disposed to cover at least a portion of a third periphery of the third display region by being coupled to the third housing portion.

For example, the electronic device may include a blocking member (e.g., the cover member 420 of FIG. 4A) supported by the display protection member when the second housing portion and the third housing portion are fully unfolded and disposed to cover at least a portion of a fourth periphery of a bending display region between the second display region and third display region.

For example, the blocking member may be coupled to the display protection member, and a portion of the blocking member may also move in the first direction and the second direction, respectively, together with the display protection member, as the third housing portion is folded or unfolded with respect to the second housing portion.

For example, when the first housing portion and the third housing portion are fully folded with respect to the second housing portion, the first housing portion may be positioned between the second housing portion and the third housing portion.

For example, a width of the first housing portion may be smaller than a width of each of the second housing portion and the third housing portion.

For example, when the first housing portion and the third housing portion are fully folded with respect to the second housing portion, the display protection member may be spaced apart from the first housing portion.

For example, when the first housing portion and the third housing portion are fully folded with respect to the second housing portion, a separation distance between an upper surface (e.g., the protection surface 410a of FIG. 4C) of the display protection member and an outer sidewall (e.g., the side surface 210c of FIG. 4C) of the first housing portion may be within a range of approximately 0.05 mm to 0.2 mm.

For example, the electronic device may include a support member (e.g., the bracket 800 of FIG. 8C) that is integrally formed with the second hinge assembly or that accommodates the display protection member by being coupled with the second hinge assembly. The display protection member may include a slide portion that is slidable with respect to a second support member by being formed on the second surface opposite to the first surface. The support member may include a seating groove which may be seated on the display protection member, and a rail portion which guides the slide portion to move in the direction facing away from the second hinge housing portion of the seating groove.

As mentioned above, the electronic device may include the foldable housing including the first housing portion, the second housing portion, and a hinge housing portion at least partially disposed between the first housing portion and the second housing portion. The electronic device may include a hinge assembly at least partially accommodated in the hinge housing portion and rotatably connected to the first housing portion and the second housing portion. The electronic device may include the flexible display including the first display region and the second display region accommodated in the first housing portion and the second housing portion, respectively. The electronic device may include the display protection member disposed adjacent to the end portion in the longitudinal direction thereof of the second hinge housing portion. The display protection member may be configured to move in the first direction facing away from the hinge housing portion and the second direction opposite thereto, respectively, as the third housing portion is folded or unfolded with respect to the second housing portion.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing (200) including a first housing part (210), a second housing part (220), and a third housing part (230);
a first hinge structure (250) rotatably coupling the first housing part (210) and the second housing part (220);
a second hinge structure (260) rotatably coupling the second housing part (220) and the third housing part (230);
a first hinge housing (255) to cover a portion of the first hinge structure (250);
a second hinge housing (265) to cover a portion of the second hinge structure (260), the second hinge housing (265) being wider than the first hinge housing (255);
a foldable display (240) supported by the first housing part (210), the second housing part (220) and the third housing part (230), the foldable display (240) including a bendable display portion (245) corresponding to the second hinge structure (260), the foldable display (240) being configured to be bent in a single-folded state or a multi-folded state of the electronic device (101); and
a protection member (410), accommodated in a longitudinal end portion of the second hinge housing (265), adjacent to the bendable display portion (245) of the foldable display (240),
wherein the protection member (410) is configured to, when the third housing part (230) is rotated with respect to the second housing part (220) from the single-folded state to the multi-folded state of the electronic device (101), move from a first position to a second position with respect to the second hinge housing (265).

2. The electronic device (101) of claim 1 further comprising:
a cover member (420), disposed to cover at least a portion of the periphery of the bendable display portion (245),
wherein, while changing from an unfolded state to the multi-folded state in which a side surface of the first housing part (210) is facing the bendable display portion (245), the protection member (410) moves in a first vertical direction (501) with respect to the cover member (420), and
wherein, while changing from the multi-folded state to the unfolded state, the protection member (410) moves in a second vertical direction (502) opposite to the first vertical direction (501) with respect to the cover member (420).

3. The electronic device (101) of claim 1 or claim 2,
wherein the protection member (410) includes:
a first protrusion (511) protruding from the protection member (410) toward an inner surface (221) of the second housing part (220); and
a second protrusion (512) protruding from the protection member (410) toward an inner surface (231) of the third housing part (230),
wherein the housing (200) further includes:
a first lifting portion (521), formed on the inner surface (221) of the second housing part (220), configured to push up the first protrusion (511); and
a second lifting portion (522), formed on the inner surface (231) of the third housing part (230), configured to push up the second protrusion (512),
wherein the first lifting portion (521) and the second lifting portion (522) are respectively contacted with the first protrusion (511) and the second protrusion (512) in a state in which an angle between the first housing part (210) and the second housing part (220) is within a designated angle range.

4. The electronic device (101) of claim 3,
wherein the designated angle range is 45 degrees to 90 degrees.

5. The electronic device (101) of any one of claims 1 to 4,
wherein a movement range of the protection member (410) with respect to the second hinge housing (265) is 2mm to 4mm.

6. The electronic device (101) of any one of claims 1 to 5,
wherein the protection member (410) includes a guide portion (610) sliding with respect to the second hinge housing (265) as the protection member (410) moves with respect to the second hinge housing (265),
wherein the second hinge housing (265) includes:
a seating groove (450) in which the protection member (410) is seated; and
a guide rail (620), formed on a sidewall (801) of the seating groove (450), guiding the guide portion (610) to be moved in a first vertical direction (501) facing away from the second hinge housing (265) or a second vertical direction (502) opposite to the first vertical direction (501).

7. The electronic device (101) of claim 6,
wherein the protection member (410) further includes a hook portion (630) protruding from the protection member (410) toward the sidewall (801),
wherein the second hinge housing (265) further includes a hole (650), forming a space accommodating the hook portion (630) to be movable, limiting movement of the hook portion (630) to prevent the protection member (410) from being separated from the second hinge housing (265) in a state in which the third housing part (230) is unfolded with respect to the second housing part (220).

8. The electronic device (101) of claim 7 further comprising:
an elastic member (710), disposed to provide elastic support between the protection member (410) and the second hinge housing (265),
wherein the elastic member (710) is configured to provide a repulsive force to the hook portion (630) by being pressed by the hook portion (630).

9. The electronic device (101) of claim 8,
wherein the elastic member (710) is positioned at least partially between the hole (650) and the hook portion (630),
wherein the protection member (410) is configured to move in the second vertical direction (502) based on the repulsive force exerted to the hook portion (630).

10. The electronic device (101) of any one of claims 1 to 9,
wherein the housing (200) includes:
a first protection cover (215), coupled to the first housing part (210), and covering a portion of the foldable display (240);
a second protection cover (225), coupled to the second housing part (220), and covering a portion of the periphery of the foldable display (240); and
a third protection cover (235), coupled to the third housing part (230), and covering a portion of the periphery of the foldable display (240),
wherein the protection member (410) is at least partially disposed between the second protection cover (225) and the third protection cover (235) when viewed from above the electronic device (101).

11. The electronic device (101) of any one of claims 1, 3 to 10, further comprising:
a cover member (420), disposed to cover at least a portion of a periphery of the bendable display portion (245) to prevent inflow of foreign substances between the bendable display portion (245) and the second hinge housing (265), supported by the protection member (410),
wherein the cover member (420) is coupled to the protection member (410) such that at least a portion of the cover member (420) is moved together with the protection member (410), as the third housing part (230) is folded or unfolded with respect to the second housing part (220).

12. The electronic device (101) of claim 2 or 11,
wherein the cover member (420) includes:
a first cover portion (421) fastened to the second housing part (220);
a second cover portion (422) fastened to the third housing part (230); and
a third cover portion (423), disposed between the first cover portion (421) and the second cover portion (422), accommodating a portion of the protection member (410) to be moved together with the protection member (410).

13. The electronic device (101) of any one of claims 1 to 12,
wherein a width of the first housing part (210) is smaller than a width of the second housing part (220) and a width of the third housing part (230).

14. The electronic device (101) of any one of claims 1 to 13,
wherein the protection member (410) is spaced apart from the first housing part (210) in the multi-folded state in which the first housing part (210) and the third housing part (230) are folded with respect to the second housing part (220) respectively.

15. The electronic device (101) of any one of claims 1 to 14,
wherein the foldable display (240) further includes a first display portion (241) coupled to the first housing part (210), a second display portion (242) coupled to the second housing part (220), a third display portion (243) coupled to the third housing part (230), a fourth display portion (244), between the first display portion (241) and the second display portion (242), configured to be bent by the first hinge structure (250), and/or
wherein the protection member (410) is movably coupled to the longitudinal end portion of the second hinge housing (265) to at least partially cover a side surface of the bendable display portion (245), and/or
wherein the protection member (410) is configured to move, with respect to the second hinge housing (265), between the first position and the second position raised from the first position with respect to the second hinge housing (265), as the third housing part (230) is folded or unfolded with respect to the second housing part (220).
